# EUROPÄISCHE PATENTSCHRIFT

(11) **EP 3 759 341 B1**
(45) Veröffentlichungstag und Bekanntmachung des Hinweises auf die Patenterteilung: **15.03.2023**
(21) Anmeldenummer: 19709426.1
(22) Anmeldetag: 01.03.2019
(51) Int. Cl.: F03D 7/02, F03D 80/00, F03G 7/00

(54) **AKTUATOREINRICHTUNG FÜR EINE WINDENERGIEANLAGE, WINDENERGIEANLAGE UND MONTAGEVERFAHREN**
ACTUATOR DEVICE FOR A WIND TURBINE, WIND TURBINE AND ASSEMBLY METHOD
DISPOSITIF ACTIONNEUR POUR UNE ÉOLIENNE, ÉOLIENNE ET PROCÉDÉ DE MONTAGE

(30) Priorität: 01.03.2018 DE 102018104731
(43) Veröffentlichungstag der Anmeldung: 06.01.2021
(73) Patentinhaber: Wobben Properties GmbH, 26607 Aurich (DE)
(72) Erfinder: ALTMIKUS, Andree, 26605 Aurich (DE)
(74) Vertreter: Eisenführ Speiser
(86) Internationale Anmeldenummer: PCT/EP2019/055195
(87) Internationale Veröffentlichungsnummer: WO 2019/166648

(56) Entgegenhaltungen:
- EP-A1- 2 899 395
- WO-A1-2017/037230
- WO-A2-2006/016907
- USAKI KEITA ET AL: "Light driven SMA actuator using optical waveguide made of past type organic material", 2014 INTERNATIONAL SYMPOSIUM ON MICRO-NANOMECHATRONICS AND HUMAN SCIENCE (MHS), IEEE, 10. November 2014 (2014-11-10), Seiten 1-6, XP032718634, DOI: 10.1109/MHS.2014.7006065 [gefunden am 2015-01-09]

## Beschreibung

Die folgende Erfindung betrifft eine Aktuatoreinrichtung für eine Windenergieanlage, insbesondere für ein Windenergieanlagenrotorblatt, eine Windenergieanlage mit dieser Aktuatoreinrichtung sowie ein Montageverfahren zum Montieren einer Aktuatoreinrichtung.

Aktoren oder Aktuatoren setzen Signale in mechanische Bewegung oder andere physikalische Größen, wie beispielsweise Druck, Temperatur, et cetera, um. Die Signale werden häufig über elektrische Leitungen übertragen. Bekannte Aktuatoren sind beispielsweise Bimetallaktuatoren, Hydraulik- oder Pneumatikaktuatoren, Piezoaktoren, um nur wenige zu nennen.

In dem Einsatz in Windenergieanlagen, insbesondere in Windenergieanlagenrotorblättern, steuern Aktuatoren beispielsweise den Auftrieb, indem sie Rotorblattklappen steuern und/oder eine Verdrilling des Rotorblattes selbst verursachen. Ein Nachteil der bekannten Aktuatoreinrichtungen für Windenergieanlagen ist die mit den elektrischen Leitungen verbundene Anfälligkeit für Blitzschläge. Wünschenswert wäre daher, eine Aktuatorik für Windenergieanlagenrotorblätter bereitzustellen, die eine geringere Gefahr von Blitzschlägen mit sich bringen.

Das Deutsche Patent- und Markenamt hat in der Prioritätsanmeldung zu vorliegender Anmeldung folgenden Stand der Technik recherchiert: EP 2 899 395 B1.

Der Artikel USAKI KEITA ETAL: "Light driven SMA actuator using optical waveguide made of past type organic material", 2014 INTERNATIONAL SYMPOSIUM ON MICRONANOMECHATRONICS AND HUMAN SCIENCE (MHS), IEEE, 10. November 2014 (2014-11-10), Seiten 1-6, XP032718634, DOI: 10.1109/MHS.2014.7006065 beschreibt eine Studie, mit dem Ziel, die Entwicklung eines lichtgetriebenen SMA-Aktors zu entwickeln, der über einen Lichtwellenleiter verfügt. Der SMA-Aktor hat viele Eigenschaften, wie eine einfache Struktur, einen dynamischen Verschiebungswert und eine große generative Kraft. Angetrieben durch Licht kann der SMA-Aktor die Risiken von elektrischen Lecks reduzieren und kann für Roboterhände in speziellen Umgebungen, wie z. B. in einer Wasser- oder Gasleitung, eingesetzt werden.

WO 2017/037230 A1 beschreibt eine Aktuatorvorrichtung, die eine elektroaktive oder photoaktive Polymeranordnung mit einer effektiven Länge umfasst, über die durch Betätigung eine Expansion oder Kontraktion induziert wird. Die effektive Länge ist größer als die maximale lineare physikalische Abmessung des von der Polymeranordnung eingenommenen Raums. Auf diese Weise wird eine kompakte Bauweise bereitgestellt, die eine große Betätigungsverschiebung unterstützen kann.

Vor diesem Hintergrund war es somit eine Aufgabe der vorliegenden Erfindung, eine Aktuatoreinrichtung für eine Windenergieanlage, eine Windenergieanlage mit dieser Aktuatoreinrichtung und ein Montageverfahren zum Montieren einer Aktuatoreinrichtung bereitzustellen, die eine höhere Betriebssicherheit gewährleisten.

In einem Aspekt wird eine Aktuatoreinrichtung für eine Windenergieanlage, insbesondere für ein Windenergieanlagen-Rotorblatt, mit einer Aktuatorkomponente und einer Steuerungskomponente bereitgestellt. Die Aktuatorkomponente weist wenigstens eine Aktuatorschicht mit einer Vorzugsrichtung und im Wesentlichen parallel zu der Aktuatorschicht wenigstens eine anregende Schicht auf. Die Aktuatorschicht umfasst einen Photoaktuator, wobei der Photoaktuator dazu eingerichtet ist, basierend auf Anregungslicht eine Dehnung und/oder Spannung der Aktuatorschicht in der Vorzugsrichtung zu verändern. Die anregende Schicht ist dazu eingerichtet, Anregungslicht in die Aktuatorschicht zu leiten, indem das an der Kante der anregenden Schicht eingeleitete Licht durch Streuung senkrecht zur Fläche der anregenden Schicht gleichmäßig verteilt ausgekoppelt wird. Die Steuerungskomponente umfasst eine Lichtquelle und einen Lichtleiter, wobei die Lichtquelle von der anregenden Schicht entfernt angeordnet ist und mittels des Lichtleiters mit der anregenden Schicht verbunden ist. Der Lichtleiter verläuft in unterschiedlichen Richtungen durch die anregende Schicht. Vorzugsweise weisen die Lichtleiter einen gegenläufigen Anteil auf, besonders bevorzugt verlaufen die unterschiedlichen Richtungen in etwa oder exakt gegenläufig.

Ein Photoaktuator weist die Eigenschaft auf, eintreffendes Licht direkt in mechanische Bewegung umzusetzen, ohne das Licht beispielsweise zunächst in elektrische Energie umzuwandeln. Die Verwendung eines Photoaktuators ermöglicht somit, die bei lichtgesteuerten Aktuatoren gewöhnlicher Weise benötigten zwei Umwandlungsvorgänge, nämlich zunächst die Lichtenergie in elektrische Energie und anschließend die elektrische Energie in mechanische Energie, zu vereinfachen.

Indem die Steuerungskomponente einen Lichtleiter aufweist, der die Lichtquelle mit der anregenden Schicht verbindet, ist es möglich, die Aktuatorkomponente ohne elektrische Verbindungsleitungen, bzw. elektrisch leitende Komponenten bereitzustellen. Das durch den Lichtleiter geleitete Licht der Lichtquelle beeinflusst den Photoaktuator, der das eintreffende Anregungslicht direkt in Dehnung und/oder Spannung der Aktuatorschicht umsetzt.

Dadurch, dass der Lichtleiter in unterschiedlichen, insbesondere entgegengesetzten, Richtungen über durch die anregende Schicht verläuft, ist ein besonders gleichmäßiger Lichteintrag in die anregende Schicht in die Aktuatorschicht möglich. Insbesondere kann dadurch, dass die Richtung und der Verlauf des Lichtleiters nicht konstant ist, einem ungleichmäßigen Lichtaustrag entlang der Länge des Lichtleiters Rechnung getragen werden. Die Erstreckungsrichtung des Lichtleiters steht vorzugsweise unter einem Winkel auf der Ebene der anregenden Schicht. Besonders bevorzugt erstreckt sich der Lichtleiter in beiden, entgegengesetzten Richtungen senkrecht auf der anregenden Schicht. Ebenso ist es besonders als vorteilhaft bevorzugt, dass der Lichtleiter an einer Kante und insbesondere senkrecht zu einer Kante der anregenden Schicht verläuft. Damit sind einfache Verbindungen aus Lichtleiter und Aktuatorkomponente möglich.

Es ist demnach besonders vorteilhaft, wenn die unterschiedlichen Richtungen jedenfalls einen Anteil bzw. eine Richtungskomponente aufweisen, die gegenläufig bzw. entgegengesetzt verläuft. Demnach hat jedenfalls der Anteil des Lichteintrages, der gegenläufig verläuft, gerade umgekehrte Ausbreitungseigenschaften in die anregende Schicht in die Aktuatorschicht. Anders ausgedrückt kann damit gewährleistet werden, dass der Anteil, der in einer ersten Richtung eingetragen wird, und der Anteil, der in der gegenläufigen Richtung eingetragen wird, durch die umgekehrten Ausbreitungseigenschaften in Summe etwa konstant bleibt. Dies ist dem Umstand geschuldet, dass der Lichtaustrag in bekannter Weise mit der Entfernung in dem Leiter regelmäßig abnimmt.

In einer Ausführungsform ist die Aktuatorkomponente als Stapelaktuatorkomponente mit einer Vielzahl gestapelter Aktuatorschichten und anregender Schichten ausgebildet. Der Lichtleiter ist über eine Vielzahl von Kanten der anregenden Schichten auf mindestens einer Schichtfläche der Stapelaktuatorkomponente ausgebildet.

Der Vorteil dieser Erfindung wird besonders dann deutlich, wenn von einer Vielzahl von anregenden Schichten in einer Stapelaktuatoranordnung ausgegangen wird. Dann ist eine direkte Anbindung jeder einzelnen anregenden Schicht mit dem Lichtleiter nicht mehr sinnvoll möglich. Eine Einkopplung des Lichts aus dem Lichtleiter in die Vielzahl von anregenden Schichten geschieht in diesem Fall vorzugsweise indem der Lichtleiter in unterschiedlichen, insbesondere entgegengesetzten, Richtungen über die Kanten mehrerer und insbesondere aller aufeinander gestapelten anregenden Schichten geführt wird.

Als Schichtfläche ist vorliegend eine Fläche des Stapels zu verstehen, die gerade nicht eine einzige der anregenden Schichten bzw. der Aktuatorschichten sondern Flächenkomponenten mehrerer der übereinander gestapelten Schichten umfasst. Dies kann beispielsweise eine Seitenfläche oder eine Mantelfläche einer rechteckig bzw. zylindrisch gestapelten Aktuatorkomponente sein.

In einer Ausführungsform weist die Aktuatoreinrichtung wenigstens zwei Lichtleiter auf, wobei wenigstens zwei der Lichtleiter von unterschiedlichen Seiten, insbesondere gegenläufig in die anregende Schicht eintreten.

Durch den Eintritt mehrerer Lichtleiter an unterschiedlichen Stellen bzw. von unterschiedlichen Seiten der anregenden Schicht bzw. wenigstens einer der anregenden Schichten kann eine Verteilung des Lichteintrags entlang des Lichtleiters, das heißt ein über die Länge des Lichtleiters variierender Lichteintrag, kompensiert werden. So kann durch die Summe der Lichteinträge der mehreren Lichtleiter eine näherungsweise homogene Beleuchtung der anregenden Schicht gewährleistet werden.

In einer Ausführungsform der Aktuatoreinrichtung wird als eine Lichtleitrichtung des oder der Lichtleiter die Richtung des Lichtleiters von der Lichtquelle aus bezeichnet, wobei benachbarte Abschnitte unterschiedlicher Lichtleiter in der anregenden Schicht wenigstens teilweise entgegengesetzte Lichtleitrichtungen haben.

Entgegengesetzte Lichtleitrichtungen führen dazu, das die im Regelfall mit der Länge abnehmende Lichtleistung bei größerer Länge des einen Lichtleiters durch die gleichzeitig ansteigende Lichtausbeute des benachbarten Abschnittes eines anderen Lichtleiters, bei dem die Lightleitrichtung entgegengesetzt verläuft, kompensiert wird.

In einer Ausführungsform der Aktuatoreinrichtung nimmt ein Lichtaustrag aus dem Lichtleiter mit der Länge des Lichtleiters ab, wobei wenigstens zwei Lichtleiter derart in der anregenden Schicht verlaufen, dass ein gleichmäßiger Lichteintrag in die Aktuatorschicht erfolgt.

In einer Ausführungsform der Aktuatoreinrichtung verlaufen wenigstens zwei Lichtleiter zumindest abschnittsweise gegenläufig durch die anregende Schicht. Auch in dieser Ausführungsform ist der besondere Vorteil dann erkennbar, wenn mehrere übereinander gestapelte Schichten eines Stapelaktuators von den Lichtleitern gegenläufig durchlaufen werden. Vorzugsweise verlaufen die Lichtleiter dann entlang der Kanten der mehreren gestapelten Schichten.

In einer Ausführungsform der Aktuatoreinrichtung ist ein Eintrittspunkt eines ersten der wenigstens zwei Lichtleiter in die anregende Schicht benachbart zu einem Austrittspunkt eines zweiten der wenigstens zwei Lichtleiter.

Besonders bevorzugt ist der Eintrittspunkt des ersten der wenigstens zwei Lichtleiter in den Stapel des Stapelaktuators benachbart zu einem Endpunkt des zweiten Lichtleiters aus dem Stapel. Damit ist der Punkt des ersten Lichtleiters, der den höchsten Lichteintrag bereitstellt, nämlich der Eintrittspunkt, in der Nähe des Punktes des zweiten Lichtleiters mit dem schwächsten Lichteintrag, nämlich dem Endpunkt. Somit wird in vorteilhafter Weise durch die benachbarte Anordnung ein mittlerer Lichteintrag der anregenden Schicht sichergestellt, der über die gesamte Fläche nahezu konstant ist.

In einer Ausführungsform der Aktuatoreinrichtung verlaufen die wenigstens zwei Lichtleiter jeweils mäanderförmig durch die bzw. entlang der anregenden Schicht, wobei sich in der anregenden Schicht jeweils im Wesentlichen parallele Abschnitte der zwei Lichtleiter abwechseln.

In einer Ausführungsform der Aktuatoreinrichtung überlagern sich die wenigstens zwei Lichtleiter im Bereich der Mäanderschlingen, in dem sich die Richtung der Lichtleiter im Wesentlichen umkehrt.

In dieser Ausführung können die Lichtleiter beispielsweise einen im Wesentlichen gleichen mäanderförmigen Verlauf haben, die dann ineinander bzw. auf Lücke gesetzt sind. In den Bereichen, in denen die Richtungsänderungen der Mäanderschlingen auftreten, kommt es dann zu einer Überlagerung der beiden Lichtleiter, während die Bereiche, die im Wesentlichen keine Richtungsänderung betreffen, parallel verlaufen und nicht überlagern.

Vorzugsweise sind die Mäanderschlingen in einem Randbereich bzw. außerhalb des Stapels aus anregenden Schichten und Aktuatorschichten ausgebildet, in dem im Regelfall kein Lichtaustritt aus den Lichtleitern erfolgt. Allerdings können die Mäanderschlingen auch innerhalb der Stapelanordnung der Aktuatorkomponente angeordnet sein und demnach natürlich auch diese Bereiche einen Beitrag zum Lichteintrag in die anregende Schicht bzw. anregenden Schichten leisten.

In einer Ausführungsform der Aktuatoreinrichtung weist die Aktuatorkomponente eine im Wesentlichen zylindrische Form mit Hohlbohrung im Inneren auf, wobei der oder die Lichtleiter im Wesentlichen innerhalb der Hohlbohrung angeordnet ist bzw. sind. Nachdem der Lichteintrag in vorteilhafter Weise in der Mitte des Zylinders erfolgt, ist ein besonders gleichmäßiger Lichteintrag möglich. Die Zylinderachse der zylindrisch geformten Aktuatorkomponente entspricht in dieser Ausführung vorzugsweise der Stapelrichtung einer Stapelaktuatorkomponente, wobei auch andere Anordnungen der Schichten, beispielsweise in der Fläche der Zylinderwand liegend, möglich sind.

In einer Ausführungsform der Aktuatoreinrichtung weist der Bereich des von der Lichtquelle entfernten Ende des Lichtleiters eine Nanobeschichtung auf. Die Nanobeschichtung sorgt vorzugsweise für diffusen oder gerichteten Lichtaustrag rund um den Lichtleiter oder in Teilabschnitten des Umfangs des Lichtleiters in genau dem Gebiet, in dem ein Lichtaustrag erwünscht ist. Natürlich ist die Nanobeschichtung nur eine Möglichkeit, den Lichtaustrag aus dem Lichtleiter zu ermöglichen, wobei dem Fachmann auch Alternativen dazu bekannt sind.

In einer Ausführungsform der Aktuatoreinrichtung umfasst die Steuerungskomponente mehrere Lichtleiter, wobei die mehreren Lichtleiter dazu konfiguriert sind, unterschiedliche Wellenlängen und/oder Spektralbereiche zu leiten.

Neben der Vergleichmäßigung des Lichteintrags durch gegenläufige Lichtleiter wie in den vorstehend beschriebenen Ausführungen, deren Abstrahlintensität enlang ihrer Länge abnehmen, sind auch Ausführungen möglich, bei denen entweder jeder einzelne der mindestens zwei Lichtleiter Licht einer jeweils eigenen Wellenlänge oder eines jeweils eigenen Spektralbereiches abdeckt. Eine jeweils gegenläufige Konfiguration von Lichtleitern für zwei Wellenlängen oder Spektralbereiche erfordert in einer weiteren bevorzugten Ausführung mindestens vier Lichtleiter.

Eine zweifarbige Ausführung ist in einer Ausführungsform besonders vorteilhaft, bei der der Photoaktuator mit der einen Wellenlänge oder dem einen Spektralbereich aktiviert und mit der anderen Wellenlänge oder dem anderen Spektralbereich deaktiviert wird.

Je nach geometrischer Ausführung des Aktuatorstapels sind bei einflächiger Lichteinleitung abwechselnd gemischte Faserverläufe der beiden Wellenlängen oder Spektralbereiche möglich. Bei mindestens zweiflächiger Lichteinleitung sind ebenso Lichteinleitungen mit jeweils nur einer Wellenlänge oder einem Spektralbereich pro Fläche zur Lichteinleitung möglich.

In einer Ausführungsform umfasst der Photoaktuator wenigstens einen photostriktiven Aktuator und/oder einen photomechanischen Aktuator.

Photostriktion ist die direkte Umwandlung von eingestrahltem Licht in Dehnung. Photomechanische Aktuatoren erzeugen ganz allgemein, unabhängig von Dehnung, mechanische Bewegung als Reaktion auf Einstrahlung von Licht. Dabei umfassen photomechanische Aktuatoren auch diejenigen, die auf sekundären Effekten der Lichteinstrahlung, wie beispielsweise der Erwärmung, beruhen.

Der Photoaktuator ist vorzugsweise derart beschaffen, dass die Anregung des Photoaktuators direkt als primärer Effekt durch das anregende Licht ausgelöst wird. Zusätzlich oder alternativ können sekundäre Effekte, beispielsweise durch thermische Erwärmung aufgrund des eintreffenden Lichtes, als Anregung des Photoaktuators zum Verrichten mechanischer Arbeit, beispielsweise zum Verändern einer Dehnung und/oder Spannung in Vorzugsrichtung, ausnutzbar sein.

In einer Ausführungsform umfasst der photomechanische Aktuator einen Aktuator aus wenigstens einer der folgenden Gruppen: a) polarisierte photomechanische Aktuatoren, b) flüssigkristallbasierte photomechanische Aktuatoren, c) auf optothermalen Übergängen basierende photomechanische Aktuatoren, d) ladungsinduzierte photomechanische Aktuatoren und e) auf Strahlungsdruck basierende photomechanische Aktuatoren.

Polarisierte photomechanische Aktuatoren sind optomechanische Aktuatoren, die bei Einstrahlung polarisierten Lichtes eine lichtinduzierte mechanische Deformation zeigen. Ein Beispiel eines Materials, das einen solchen Effekt zeigt, ist ein Glas, also ein amorpher Feststoff, der ein oder mehrere Elemente aus der Gruppe der Chalkogene aufweist. Flüssigkeitskristallbasierte photomechanische Aktuatoren wurden beispielsweise bereits für nematische Elastomere gezeigt. Beispielsweise konnte für Polymernetzwerke, die Azobenzol-flüssigkristalline Bruchteile enthalten, gezeigt werden, dass die nematische Ordnung durch optomechanische Aktuation unterdrückt, bzw. wiederhergestellt werden kann. Das heißt, optische Einstrahlung kann beispielsweise die Azobenzol-Polymerfilme aufgrund der flüssigkristallinen Ordnung verformen.

Optothermische Übergänge sind im Wesentlichen das direkte optische Äquivalent zu elektrothermischen Übergängen, und beruhen darauf, dass Teile der Energie des Anregungslichtes durch das Medium absorbiert und in thermische Energie umgewandelt wird. Im Allgemeinen werden Photoaktuatoren neben den anderen photoaktuatorischen Effekten auch zumindest immer einen Anteil an auf optothermalen Übergängen basierender Aktuatorik aufweisen.

Bei ladungsinduzierten photomechanischen Aktuatoren werden Photonen in einem Halbleiter absorbiert, freie Elektronen aus dem Valenzband in das Leitungsband angeregt und damit Löcher in dem Gitter hinterlassen, welche eine lokale mechanische Dehnung in dem Material verursachen.

Auf Strahlungsdruck basierende photomechanische Aktuatoren basieren auf dem Impulsübertrag zwischen Licht und Aktuatorstruktur. Diese physikalischen Prinzipien sind nur einige der möglichen, die einen erfindungsgemäßen Photoaktuator zur Veränderung einer Dehnung und/oder Spannung der Aktuatorschicht veranlassen. Weitere mögliche Effekte sind vorstellbar, beispielsweise kann der Photoaktuator ein Formgedächtnispolymer, das optisch aktiviert wird, oder eine Nanostruktur, die aus lokaler Ungleichverteilung Photonen erzeugter Ladungen Spannungen aufweist, umfassen.

In einer Ausführungsform umfasst der Photoaktuator wenigstens ein Material gehörend zu einer der folgenden Gruppen:
- Flüssigkristalline Materialien, insbesondere Flüssigkristall-Elastomere
- Photosiomerisierbare organische Verbindungen, speziell Azoverbindungen, z.B. Azobenzen, sowie photochrome organische Verbindungen, bei denen der photochrome Farbwechsel mit einer Isomerisierung von einem Isomer mit geöffnetem Ring zu einem Isomer mit geschlossenem Ring verbunden ist, z.B. Fulgide, Hexatriene, Diarylethene, Dithienylcyclopentene, bevorzugt photochrome Diarylethene, insbesondere photochrome Diarylethene-Einkristalle, oder Co-Kristalle photochromer Diarylethene, z.B. 1,2-bis(2-methyl-5-(1-naphthyl)-3-thienyl)perfluoro-cyclopenten, mit Verbindungen umfassend perfluorierte kondensierte Ringsysteme, z.B. Perfluoronaphthalin, insbesondere Co-Kristalle von 1,2-bis(2-methyl-5-(1-naphthyl)-3-thienyl)perfluoro-cyclopentene mit Perfluoronaphthalin
- Spin-Crossover-Materialien, insbesondere Spin-Crossover-Komplexe, z.B. solche [Fe(L){M(CN)4}]-Gerüst, worin L ein Ligand ist, z.B. eine heteroaromatische Verbindung mit mindestens einem Stickstoffatom in der aromatischen Ringstruktur, z. B. Pyrazin oder3-Cyano-Pyridin, und M ein Metall ist, z.B. Pt oder Au, z.B. {Fe(3-CNpy)[Au(CN_{)2]2}}*2/3H2O.
- Kohlenstoff-Nanoobjekte, insbesondere Kohlenstoff-Nanoröhren (einwandig und mehrwandig), Kohlenstoff-Nanofasern und Graphen,
- Nano-Verbundwerkstoffe (nano-composites) umfassend Kohlenstoff-Nanoröhren (carbon nanotubes) insbesondere mehrwandige Kohlenstoff-Nanoröhren (multiwalled carbon nanotubes MWCNT) und/oder Graphene, in einer Matrix, vorzugsweise einer elastischen Matrix, insbesondere einer elastischen Polymermatrix, z.B. einer Matrix umfassend Polydimethylsiloxan PDMS oder einer Matrix umfassend Flüssigkristall-Elastomere, oder einer Matrix umfassend ein Formgedächtnis-Polymer
- Schicht-Verbundwerkstoffe umfassend einen Film aus Kohlenstoff-Nanoröhren verbunden mit einem Elastomerfilm, z. B einem Film enthaltend ein Acryl-Elastomer
- photoresponsive Polymere, z.B. in Form lichtempfindlicher Hydrogele, insbesondere Hydrogele aus kovalent vernetzten Copolymer-Netzwerken aus einem thermoresponsiven Polymer und einem Chromophor
- Biologische photoresoponsive Moleküle, z.B. photoresponsive Proteine, z.B Bacteriorhodopsin
- Chalcogenid-Gläser, z.B. As₅₀Se₅₀
- Ferroelektrische Materialien, z.B. ferroelektrische Einkristalle, und ferroelektrische polykristalline Materialien, z.B. polarisierte ferroelektrische Keramik, z.B. Lanthanium-modifizierte Bleizirconat-titanat (PLZT). und dotiertes Lanthanummodifiziertes Bleizirconattitanat, z.B. mit WOs dotierte Lanthanium-modifizierte Bleizirconattitanat
- Polare Halbleiter
- Rotaxane
- optisch aktivierbare Piezokristalle.

Die Verwendung dieser und weiterer Materialien als Photoaktoren ist, nur um ein paar Beispiele zu nennen, aus dem Buch "Optical Nano and Micro Actuator Technology" (CRC Press 2012), aus den Veröffentlichungen Iwaso et. al, "Fast response dry-type artificial molecular muscles with [c2]daisy chains", Nature Chemistry, Vol. 9, June 2016, 625-631 doi: 10.1038/NCHEM.2513; Shepherd, H. J. et al. "Molecular actuators driven by cooperative spin-state switching" Nat. Commun. 4:2607 doi: 10.1038/ncomms3607 (2013) und Morimoto et. al, "A Diarylethene Cocrystal that Converts Light into Mechanical Work", Journal of American Chemical Society 2010, 132, 14172-14178, bekannt.

In einer Ausführungsform ist die Aktuatorschicht in wenigstens einer Richtung anisotrop. Nachdem die Aktuatorschicht in wenigstens einer Richtung anisotrop ist, sind nicht alle Eigenschaften der Aktuatorschicht von einer Richtung unabhängig. Insbesondere führt die Anisotropie vorzugsweise dazu, dass der Photoaktuator, bzw. die Aktuatorschicht die Vorzugsrichtung ausbildet.

In einer Ausführungsform weist die Aktuatorschicht einen Faserverbundstoff auf. Ein Faserverbundstoff weist vorzugsweise zwei Hauptkomponenten, nämlich eine bettende Matrix sowie verstärkende Fasern auf. Die Fasern umfassen beispielsweise, ohne darauf beschränkt zu sein, Glasfasern, Kohlenstofffasern, Keramikfasern, etc. Das Material der einbettenden Matrix kann beispielsweise, ohne darauf beschränkt zu sein, Polymere wie Duromere, Elastomere oder Thermoplaste, aber auch andere Elemente wie Zement, Metalle, Keramiken, etc. umfassen. Derartige Werkstoffe sind besonders im Bereich der Windenergieanlagen vorteilhaft einsetzbar.

In einer Ausführungsform ist der Photoaktuator in der Aktuatorschicht in einer Matrix, insbesondere einer Harzmatrix, eingebettet. Mit dem Begriff Harz sind feste bis flüssige organische Stoffe bezeichnet. Insbesondere werden mit Harz Polymere als Grundstoff für Kunststoffe bezeichnet. Mittels einer Matrix können Photoaktuatoren in vorteilhafter Form in der Aktuatorschicht eingebettet werden.

In einer Ausführungsform weist die Aktuatorkomponente mindestens zwei Aktuatorschichten mit mindestens einer, jeweils dazwischenliegenden anregenden Schicht auf.

Die Anordnung in mehreren Schichten ist vergleichbar mit der bekannten Anordnung eines Piezo-Stacks. Wenn die Aktuatorkomponente viele übereinanderliegende Aktuatorschichten aufweist, lässt sich in vorteilhafter Weise eine Vorzugsrichtung in Stapelrichtung realisieren. Der Aktuatorweg ist dann proportional zur Anzahl der Schichten und kann in gewissen Maßen in vorteilhafter Weise skaliert werden.

Die Vorzugsrichtung muss aber nicht in jeder Ausführungsform der Stapelrichtung entsprechen. Insbesondere in dem Fall, in dem die Aktuatorkomponente zwei Aktuatorschichten mit einer dazwischenliegenden anregenden Schicht aufweist, kann die Vorzugsrichtung auch in der Schichtebene der Aktuatorschichten bzw. der anregenden Schicht liegen. Vorzugsweise weisen in diesem Fall die zwei Aktuatorschichten unterschiedliche Reaktionen auf Anregungslicht auf, beispielsweise erfährt die eine anregende Schicht eine Dehnung in Vorzugsrichtung, während die andere anregende Schicht eine Stauchung in Vorzugsrichtung erfährt. Dies resultiert in einer Biegung der Aktuatorkomponente. In anderen Ausführungsformen können die Aktuatorschichten aber auch die gleiche Reaktion zeigen, sodass eine Dehnung der gesamten Aktuatorkomponente in der Vorzugsrichtung in der Schichtebene resultiert.

In weiteren Ausführungsformen können auch mehr als eine anregende Schicht zwischen zwei Aktuatorschichten bereitgestellt werden. In diesem Fall kann unterschiedliches Anregungslicht in die jeweiligen Aktuatorschichten eingeleitet werden.

In einer Ausführungsform ist die Aktorkomponente eingerichtet, mittels Anregungslicht eine Kraft von 10 bis 50 Newton je Quadratmilimeter (N/mm²) Querschnittsfläche der Aktuatorkomponente aufzubringen, wobei die Querschnittsfläche der Aktuatorkomponente senkrecht auf der Vorzugsrichtung ist.

Eine Kraft in Newton je Quadratmillimeter Querschnittsfläche entspricht einem Druck in Megapascal, der Bereich von 10 bis 50 N/mm² ist ein Wert, der für Piezoaktoren weit verbreitet ist und Anwendungen in vielen Bereichen, insbesondere der Windenergieanlagen, ermöglicht.

Vorzugsweise wird die Querschnittsfläche der Aktuatorkomponente senkrecht zu der Vorzugsrichtung als Aktorfläche bezeichnet und wird vorzugsweise als die Fläche der gesamten Aktuatorkomponente, einschließlich Aktuatorschicht und anregender Schicht, bestimmt.

Die Aktorfläche ist somit für einen Stapelaktor vorzugsweise unabhängig von der Anzahl der Schichten und entspricht der Fläche einer der entsprechenden Schichten.

In einer Ausführungsform ist die Aktuatorkomponente als Dehnungsaktuatorkomponente ausgestaltet, wobei eine Dehnungsrichtung der Vorzugsrichtung entspricht, die im Wesentlichen senkrecht auf der wenigstens einen Aktuatorschicht steht, oder die Aktuatorkomponente ist als Biegeaktuatorkomponente ausgestaltet, wobei die Dehnungsrichtung im Wesentlichen senkrecht auf der Vorzugsrichtung der Aktuatorschicht steht.

Dehnungsaktuatorkomponenten ermöglichen eine vorzugsweise lineare mechanische Verformung, wobei diese lineare mechanische Verformung beispielsweise in Bewegung eines anderen Bauteils übersetzbar ist. Vorzugsweise entspricht der stapelartige Aufbau der Aktuatorkomponente einer Dehnungsaktuatorkomponente, wobei der lineare Dehnungsweg in diesem Beispiel der Stapelrichtung entspricht. Eine Dehnungsaktuatorkomponente kann in einer Ausführungsform zur Ansteuerung einer Auftriebsklappe eines Rotorblattes einer Windenergieanlage ausgebildet werden.

Im Unterschied dazu ist eine Biegeaktuatorkomponente eingerichtet, die Aktuatorkomponente in einer Dehnungs- oder Auslenkrichtung senkrecht zu der Vorzugsrichtung zu verbiegen. Die Biegeaktuatorkomponente ist vorzugsweise als flächige Aktuatorkomponente ausgestaltet, die sich über einen größeren Bereich des zu steuernden Bauteils erstreckt. Die Vorzugsrichtung verläuft im Wesentlichen in der Ebene, in der die Aktuatorkomponente ihre flächige Ausdehnung zeigt. Hierbei können in einer Ausführungsform eine oder mehrere in der Ebene liegende Aktuatorschichten und/oder anregende Schichten, wobei die Vorzugsrichtung dann in der Aktuatorschicht liegt, oder in einer anderen Ausführungsform mehrere senkrecht auf der Ebene stehende, gestapelte Schichten, wobei die Vorzugsrichtung dann senkrecht auf der ebene der jeweiligen Aktuatorschichten liegt, aufweisen. Die Biegeaktuatorkomponente weist vorzugsweise eine zu ihren sonstigen Ausmaßen geringe Erstreckung senkrecht zu der Ebene, in der sie ihre flächige Ausdehnung zeigt, auf.

In einer Ausführungsform ist eine derartige Biegeaktuatorkomponente zur Steuerung einer Servoklappe eines Rotorblattes einer Windenergieanlage ausgelegt. Im Gegensatz zu der Dehnungsaktuatorkomponente umfasst der Biegeaktuator zumindest in dem Fall, dass die Schichten parallel zu der Ebene, in der die Biegeaktuatorkomponente ihre flächige Ausdehnung zeigt, angeordnet sind, eine deutlich geringere Anzahl an Aktuatorschichten, bzw. anregenden Schichten, und nimmt bei vergleichbarem Volumen eine größere Fläche ein.

In einer Ausführungsform liegt ein Verhältnis von Aktorfläche zu einem Quadrat einer Referenzlänge der Aktuatorkomponente in einem Bereich von 0,0001 bis 0,01 und insbesondere in dem Fall, dass die Aktuatorkomponente als Dehnungsaktuatorkomponente ausgestaltet ist, in einem Bereich von 0,01 bis 1.

Als eine Referenzlänge der Aktuatorkomponente wird das Verhältnis aus Aktuatorweg und Dehnungsweg bezeichnet. Wird beispielsweise ein Aktuator derart ausgelegt, dass ein Aktuatorweg von 0,1 mm benötigt wird, der eine Dehnung von 0,1 % ermöglicht, ergibt sich daraus eine Referenzlänge von 100 mm. Dies ist natürlich ein Beispiel, und die eigentliche Auslegung des Aktuators kann basierend auf den reellen Anforderungen getroffen werden.

Der Bereich von 0,01 bis 1 für das Verhältnis von Aktorfläche zu einem Quadrat der Referenzlänge entspricht einem Bereich, wie er insbesondere für Auftriebsklappen bei Windenergieanlagen benötigt wird. Der Bereich von 0,0001 bis 0,01 entspricht einem Bereich, wie er insbesondere für die Auslegung von Servoklappen für Windenergieanlagen Anwendung findet.

In einer Ausführungsform liegt eine von der Aktuatorkomponente verrichtbare mechanische Arbeit in einem Bereich von 100 bis 10.000 Joule je Kubikmeter (J/m³) Aktuatorvolumen, wobei die von der Aktuatorkomponente verrichtbare mechanische Arbeit insbesondere in dem Fall, dass die Aktuatorkomponente als Dehnungsaktuatorkomponente ausgestaltet ist, in einem Bereich von 1.000 bis 10.000 Joule je Kubikmeter Aktuatorvolumen oder in dem Fall, dass die Aktuatorkomponente als Biegeaktuatorkomponente ausgestaltet ist, in einem Bereich von 100 bis 1.000 Joule je Kubikmeter Aktuatorvolumen liegt.

Als Aktuatorvolumen wird das Volumen der Aktuatorkomponente bezeichnet, wobei das Aktuatorvolumen vorzugsweise zumindest die Aktuatorschicht und die anregende Schicht umfasst. Die verrichtbare mechanische Arbeit in einem Bereich von 100 bis 10.000 J/m³ ist insbesondere für die eingangs erwähnten Beispiele von Photoaktuatoren möglich und kann je nach Ausgestaltung der Aktuatorkomponente erreicht werden.

Im Allgemeinen liegt die erreichbare Energiedichte bei Flächenaktuatoren um etwa einen Faktor 10 niedriger als für einen Stapelaktuator. Der Bereich von 100 bis 1000 J/m³ Aktuatorvolumen kann vorzugsweise für die Ansteuerung von Servoklappen von Windenergieanlagen verwendet werden. Der Bereich von 1.000 bis 10.000 J/m³ Aktuatorvolumen ist vorzugsweise ausgelegt, eine Auftriebsklappe einer Windenergieanlage anzusteuern.

In einer Ausführungsform ist die Aktuatorkomponente als Biegeaktuatorkomponente ausgestaltet und dazu eingerichtet, sich durch Anregung senkrecht zu der Vorzugsrichtung zu biegen.

Die Biegeaktuatorkomponente ist somit vorzugsweise zum Verbiegen senkrecht zu der Ebene der Vorzugsrichtung ausgelegt. Insbesondere liegt die Vorzugsrichtung in der Ebene, in der die Biegeaktuatorkomponente eine flächige Ausdehnung zeigt, beispielsweise auf einem Substrat bzw. einer Oberfläche eines Bauteils angebracht ist. Dadurch lässt sich eine flächige Aktuatorkomponente auslegen, die direkt eine Verformung der Fläche bewirkt, auf die der Aktuator angebracht ist. Die Biegeaktuatorkomponente entspricht vorzugsweise in ihrem Wirkprinzip einem Bimetallaktor und kann auf ähnliche Weise ausgebildet sein. In einer Ausgestaltung der Biegeaktuatorkomponente liegt die Vorzugsrichtung in der Ebene der Aktuatorschicht, das heißt die eine oder mehreren Aktuatorschichten verlaufen im Wesentlichen parallel zu der Fläche, auf der der Aktuator angebracht ist. In einer anderen Ausgestaltung ist die Biegeaktuatorkomponente aus vielen Schichten aufgebaut, die im Wesentlichen senkrecht auf der Fläche, auf der der Aktuator angebracht ist, verlaufen. In diesem Fall verläuft auch die Vorzugsrichtung im Wesentlichen senkrecht zu den parallelen Ebene der mehreren Aktuatorschichten.

In einer Ausführungsform liegt ein Verhältnis von Höhe der Aktuatorkomponente zu einer Länge der Aktuatorkomponente in Vorzugsrichtung in einem Bereich von 0,001 bis 0,1, insbesondere in einem Bereich von 0,002 bis 0,02.

Die Ebene der Aktuatorschicht spannt sich in dieser Ausführungsform über die Vorzugsrichtung und eine senkrecht darauf stehende Richtung auf. Die von der Aktuatorkomponente zu verrichtende mechanische Arbeit ist proportional zu der Breite der Aktuatorkomponente, die senkrecht auf der Vorzugsrichtung steht. Anders ausgedrückt, ein differentieller Beitrag der Aktuatorkomponente in Breitenrichtung ist konstant und vorzugsweise bereits durch das Verhältnis aus Höhe zu Länge in Vorzugsrichtung bestimmt. Aktuatorkomponenten, bei denen dieses Verhältnis in dem bevorzugten Bereich liegt, eignen sich besonders gut für den Einsatz an Windenergieanlagen-Rotorblättern.

Für das Bespiel einer Servoklappe eines Rotorblattes einer Windenergieanlage kann die Vorzugsrichtung der Richtung des Profils des Rotorblattes entsprechen. Die Servoklappe kann dann beispielsweise in den Bereich der Hinterkante des WindenergieanlagenRotorblattes mit einer bestimmten Länge in Richtung der Profilsehne vorgesehen sein. Die zur Ansteuerung der Servoklappe zu verrichtende mechanische Arbeit ist proportional zu der Breite der Klappe in Radiusrichtung des Rotorblattes, d.h. die Arbeit pro Einheit in Breitenrichtung ist über den Radius des Rotorblattes der Windenergieanlage von Nabe zu Blattspitze im Wesentlichen konstant. Beispielsweise kann eine solche Servoklappe eine Breite von einem Meter aufweisen. Da sowohl die von der Aktuatorkomponente verrichtbare mechanische Arbeit als auch die von der Servoklappe geforderte mechanische Arbeit proportional und linear von der Breite des Aktors bzw. der Servoklappe abhängen, ist es ausreichend, die Länge der Aktuatorkomponente und deren Höhe anzugeben. Das Volumen und die damit verrichtbare mechanische Arbeit der Aktuatorkomponente ergeben sich dann durch Multiplikation mit der Länge, die der Länge der Servoklappe entspricht.

In einer Ausführungsform liegt eine Höhe der Aktuatorkomponente senkrecht zu einer Ebene der wenigstens einen Aktuatorschicht in einem Bereich von 1 mm bis 10 mm, bevorzugt in einem Bereich von 3 mm bis 7 mm und besonders bevorzugt von etwa 5 mm.

Vorzugsweise ist der Begriff etwa als Rundungsungenauigkeit zu verstehen, das heißt, der Bereich von 4,5 bis beispielsweise 5,49 mm ist als etwa dem Wert von 5 mm zu verstehen. Eine Höhe der Aktuatorkomponente, die in dem bevorzugten Bereich liegt, erfüllt die Anforderungen besonders für den Einsatz im Bereich von Windenergieanlagen.

In einer Ausführungsform umfasst die anregende Schicht ultradünnes Glas und/oder Polymer, insbesondere mit einer Stärke von 20µm bis 100µm.

Ultradünnes Glas und/oder Polymer ist selbstverständlich nur ein Beispiel für ein Material, das in der anregenden Schicht enthalten sein kann. Auch andere geeignete Materialien sind vorstellbar. Ultradünnes Glas bzw. Polymer ermöglicht vorteilhafterweise, dass die anregende Schicht trotz sehr geringer Dicke die gewünschten Eigenschaften zeigt.

In einer Ausführungsform weist die Aktuatorkomponente eine Verspiegelung auf, die dazu eingerichtet ist, das Anregungslicht zu reflektieren, wobei die Verspiegelung die Aktuatorkomponente an wenigstens einer Seitenfläche zumindest teilweise umgibt, insbesondere die Aktuatorkomponente an der Seite der anregenden Schicht umgibt, die der Aktuatorschicht gegenüberliegt.

Vorzugsweise ist die Verspiegelung auf die Wellenlänge des Anregungslichtes ausgelegt. Aufgrund der Verspiegelung ist es möglich, Lichtverluste beispielsweise dadurch, dass Anregungslicht aus der anregenden Schicht austritt, anstelle in die Aktuatorschicht geleitet zu werden, zu verringern. Somit erhöht sich eine Effizienz der gesamten Aktuatorkomponente.

In einer Ausführungsform ist der Lichtleiter derart angeordnet, Licht in einer Längsrichtung in die anregende Schicht einzuleiten, wobei die Längsrichtung in einer Ebene der anregenden Schicht liegt, wobei die Ebene der anregenden Schicht durch die Längsrichtung und eine Breitenrichtung aufgespannt wird, wobei insbesondere die Vorzugsrichtung in einem Fall, in dem die Aktuatorkomponente als Biegeaktuatorkomponente ausgestaltet ist, im Wesentlichen der Längsrichtung oder einer davon abweichenden Richtung, die in einer Ebene der wenigstens einen Aktuatorschicht liegt, entspricht, oder die Vorzugsrichtung in einem Fall, in dem die Aktuatorkomponente als Dehnungsaktuatorkomponente ausgestaltet ist, im Wesentlichen senkrecht auf der Längsrichtung und/oder der Ebene der wenigstens einen Aktuatorschicht steht.

Dadurch, dass die Längsrichtung in eine Ebene der anregenden Schicht liegt, ist es besonders einfach, Licht mittels des Lichtleiters in die Schicht einzuleiten. In anderen Ausführungsformen kann die Längsrichtung auch als eine Richtung der anregenden Schicht definiert sein, wobei ein oder mehrere Lichtleiter in der Ebene der anregenden Schicht Licht in die anregende Schicht einleiten, wobei die Richtungen, mit denen der oder die Lichtleiter Licht einleiten, nicht unbedingt der Längsrichtung entsprechen.

Vorzugsweise wird in dieser Ausführungsform, abhängig davon, ob die Aktuatorkomponente als Biegeaktuatorkomponente oder als Dehnungsaktuatorkomponente ausgestaltet ist, ein unterschiedlicher Effekt des Photoaktuators ausgenutzt. Vorzugsweise wird nämlich in dem Fall der Biegekomponente ein Transversaleffekt des Photoaktuators und in dem Fall, in dem die Aktuatorkomponente als Dehnungsaktuatorkomponente ausgestaltet ist, ein Longitudinaleffekt des Photoaktuators ausgenutzt. Der Transversaleffekt ist vergleichbar mit dem für Piezoaktoren bekannten Quereffekt, bzw. d31-Effekt und der Longitudinaleffekt ist vergleichbar mit dem Längseffekt, bzw. d33-Effekt. Auch dies sind nur beispielhafte Ausgestaltungen, in anderen Ausführungsformen können auch andere Effekte, beispielsweise ein Schereffekt oder eine Kombination von Transversaleffekt und Longitudinaleffekt, eingesetzt werden.

In einer Ausführungsform weist die Aktuatoreinrichtung weiter einen Verstärkungsrahmen auf, welcher die Aktuatorkomponente umschließt, wobei der Verstärkungsrahmen derart angeordnet ist, dass eine Dehnung der Aktuatorschicht in Vorzugsrichtung zu einer Stauchung des Verstärkungsrahmens senkrecht zu der Vorzugsrichtung führt, wobei der Verstärkungsrahmen zur Übersetzung zwischen der Bewegung in Vorzugsrichtung und im Wesentlichen senkrecht dazu eingerichtet ist.

Ein derartiger Verstärkungsrahmen implementiert mit anderen Worten ein Wegvergrößerungssystem, mit dem ein Aktuatorweg in einen längeren Bewegungsweg übersetzt werden kann. Insbesondere in dem Fall, in dem die Aktuatorkomponente mehrere Schichten aufweist, bzw. als Stapelaktuator ausgebildet ist, können mittels des Verstärkungsrahmens die erreichbaren Stellwege der Aktuatorkomponente derart vergrößert werden, dass sie besonders geeignet für Anwendungen in der Windenergieanlage ist.

Durch die Übersetzung ändert sich die vom Aktuator verrichtbare mechanische Energie nicht. Entsprechend reduziert sich bei einer vergrößerten Wegstrecke die je Wegstrecke aufbringbare Kraft entsprechend. Ein Übersetzungsfaktor eines Verstärkungsrahmens liegt, ohne darauf beschränkt zu sein, in einem Bereich von 2 bis 10, insbesondere bei etwa 5.

In einer Ausführungsform weist die anregende Schicht auf der oder den an die Aktuatorschicht angrenzenden Seiten wenigstens ein Diffusionselement zur diffusen Einleitung von Anregungslicht in die Aktuatorschicht aufweist, wobei das Diffusionselement insbesondere Oberflächenunregelmäßigkeiten, vorzugsweise gelaserte und/oder geätzte Microkavitäten, umfasst.

Vorzugsweise erreicht das Diffusionselement eine gleichmäßige Verteilung des Anregungslichtes in der Aktuatorschicht. In anderen Ausführungsformen kann das Diffusionselement alternativ oder zusätzlich als eigenständige Schicht zwischen anregender Schicht und Aktuatorschicht, bzw. als Teil der Aktuatorschicht ausgebildet sein. Auch andere Diffusionselemente, die nicht basierend auf Oberflächenunregelmäßigkeiten gebildet sind, sind vorstellbar.

In einer Ausführungsform weist die anregende Schicht ein Konversionselement auf, das dazu eingerichtet ist, Licht von der Lichtquelle in Anregungslicht umzuwandeln, wobei das Anregungslicht eine andere Wellenlänge und/oder ein anderes Spektrum als das Licht der Lichtquelle aufweist.

Mittels eines Konversionselementes ist es nicht nötig, dass das Licht der Lichtquelle genau auf den Photoaktuator abgestimmt ist. Somit kann auch in dem Fall, in dem Licht von der Lichtquelle nicht als Anregungslicht geeignet ist, der Photoaktuator angeregt werden, nachdem das Licht durch das Konversionselement in Anregungslicht konvertiert wird.

In einer Ausführungsform weist das Konversionselement ein fluoreszierendes oder ein phosphoreszierendes Material auf. Insbesondere bei Verwendung eines phosphoreszierenden Materials kann somit auch nach dem Abschalten der Bestrahlung der Lichtquelle eine Anregung des Photoaktuators erfolgen. Diese Materialien sind allerdings nur Beispiele, andere Konversionselemente sind denkbar. Auch ist das Konversionselement als Teil der anregenden Schicht lediglich beispielhaft zu verstehen, wobei in anderen Ausführungsformen ein eigenständiges Konversionselement zwischen anregender Schicht und Aktuatorschicht, bzw. das Konversionselement als Teil der Aktuatorschicht ausgebildet sein kann.

In einem weiteren Aspekt wird ein Rotorblatt einer Windenergieanlage mit einer Aktuatoreinrichtung gemäß einer Ausführungsform der Erfindung und einem aktiven Element bereitgestellt, wobei die Aktuatoreinrichtung zur Steuerung des aktiven Elementes eingerichtet ist.

Das Rotorblatt mit einer erfindungsgemäßen Aktuatoreinrichtung ermöglicht somit, dass das aktive Element, das an dem Rotorblatt bereitgestellt ist, gesteuert werden kann, ohne dass es mit elektrischen Leitungen verbunden sein muss. Alle weiteren Vorzüge und Vorteile der genannten Ausführungsformen der erfindungsgemäßen Aktuatoreinrichtung können in gleicher Weise auch auf das Rotorblatt übertragen werden. Das aktive Element umfasst vorzugsweise eine Auftriebsklappe, eine Servoklappe, einen Vortex-Generator oder ein sonstiges aktives Element, mit dem beispielsweise aerodynamische und/oder akustische Eigenschaften des Rotorblattes verändert werden können.

In einer Ausführungsform des Rotorblattes ist die Aktuatorkomponente der Aktuatoreinrichtung als Biegeaktuatorkomponente ausgestaltet und die Klappe ist als Servoklappe ausgestaltet, wobei die Aktuatorkomponente flächig über den Bereich der Servoklappe montiert ist.

Bei einer Servoklappe handelt es sich vorzugsweise um ein formveränderliches aktives Element, das heißt, dass sich die Servoklappe selbst durch Betätigung in ihrer Form ändert, beispielsweise verbiegt. Die Servoklappe ist vorzugsweise in einem Bereich der Blattspitze des Rotorblattes vorgesehen und umfasst einen Bereich von 10 bis 20 % des Rotorblattprofils von der Hinterkante aus betrachtet. Der Bereich der Blattspitze umfasst insbesondere die in radialer Richtung von einer Rotorblattnabe aus betrachteten äußeren 30% der Länge des Rotorblattes, wobei eine Servoklappe eine Länge in Radiusrichtung des Rotorblattes in dem ganzen Bereich der Blattspitze oder nur in einem Teilbereich, beispielsweise in der Größenordnung von 1 m bis 10 m, vorgesehen sein kann.

Die Aktuatorkraft der Servoklappe muss im Wesentlichen gleich verteilt über den gesamten Bereich der Servoklappe aufgebracht werden. Aus diesem Grund ist es bevorzugt, dass ein möglichst großer Bereich der Servoklappe mit der Aktuatoreinrichtung, die als Biegeaktuator ausgestaltet ist, bedeckt ist. Hierbei muss es sich natürlich nicht um eine einzige flächige Aktuatorkomponente handeln, sondern auch mehrere einzelne Aktuatorkomponenten, die entsprechend Teile der Servoklappe bedecken und jeweils eigenständige Steuerungskomponente aufweisen, sind vorstellbar. Die Servoklappe kann beispielsweise als zentrale Schicht aus einem biegbaren Material, beispielsweise glasfaserverstärkter Kunststoff, ausgestaltet sein, wobei wenigstens eine Biegeaktuatorkomponente auf der Oberseite und/oder der Unterseite der zentralen Schicht ausgebildet ist. Für die Formgebung kann ferner ein elastisches Material über die zentrale Schicht und die Aktuatorkomponente ausgebildet sein.

In einer Ausführungsform des Rotorblattes ist die Aktuatorkomponente der Aktuatoreinrichtung als Dehnungsaktuatorkomponente ausgestaltet und die Klappe ist als Auftriebsklappe ausgestaltet, wobei das Rotorblatt ferner eine Übersetzungseinheit zum Übersetzen der Bewegung der Aktuatorkomponente in eine Steuerung der Auftriebsklappe aufweist.

Eine Auftriebsklappe ist vorzugsweise ein diskretes Bauteil mit beispielsweise 15 bis 50 % Erstreckung in Profiltiefenrichtung. Die Position der Auftriebsklappe wird bezüglich des Rotorblattes mittels der Aktuatoreinrichtung verändert. Beispielsweise wird die Auftriebsklappe gegenüber dem Rotorblatt verdreht, um einen Auftrieb zu erhöhen, bzw. zu verringern. Die Übersetzungseinheit weist in einer Ausführungsform eine Schub-/Zugstange auf, mit der die Aktuatorbewegung wie bei bekannten Auftriebsklappen in eine Bewegung der Auftriebsklappe umgesetzt wird. Nachdem die Aktuatoreinrichtung als Dehnungsaktuatorkomponente ausgestaltet ist, erzeugt die Dehnungsaktuatorkomponente eine lineare Aktuatorbewegung, die von der Übersetzungseinheit einfach übersetzt werden kann.

In einer Ausführungsform des Rotorblattes weist die Aktuatoreinrichtung einen Verstärkungsrahmen auf, welcher die Aktuatorkomponente umschließt, wobei die Übersetzungseinheit eine Schub-/Zugstange zur Kopplung des Verstärkungsrahmens an die Auftriebsklappe aufweist.

In dem die Aktuatoreinrichtung den Verstärkungsrahmen aufweist, kann der möglicherweise kurze Aktuatorweg in eine längere Bewegung des Verstärkungsrahmens übersetzt werden. Typische Übersetzungsverhältnisse, die mit einem derartigen Verstärkungsrahmen erreicht werden können, liegen im Bereich von 2 bis 10, das heißt, dass der Aktuatorweg auf das Zwei- bis Zehnfache verlängert werden kann. Auch andere Übersetzungen sind vorstellbar, beispielsweise können auch mehrere Übersetzungseinrichtungen, beispielsweise Verstärkungsrahmen, in Reihe geschalten werden. Anstelle der Schub-/Zugstange oder zusätzlich dazu können auch weitere Elemente von der Übersetzungseinheit umfasst sein, um die Bewegung der Aktuatorkomponente in die Steuerung der Auftriebsklappe zu übersetzen.

In einer weiteren Ausführungsform weist das Rotorblatt der Windenergieanlage mehrere aktive Elemente auf. Die mehreren aktiven Elemente können beispielsweise mehrere Auftriebsklappen, mehrere Servoklappen, Vortex-Generatoren, oder andere aktive Elemente sein. In einer weiteren Ausführungsform kann auch eine kombinierte Servoklappe und Auftriebsklappe am Rotorblatt bereitgestellt werden. Für das jeweilige aktive Element, bzw. die Kombination der aktiven Elemente, können dann jeweils geeignete Ausgestaltungen der erfindungsgemäßen Aktuatoreinrichtung zum Einsatz kommen.

In einem weiteren Aspekt wird Windenergieanlage mit einem Rotorblatt gemäß einer Ausführungsform der Erfindung bereitgestellt.

In einem weiteren Aspekt wird ein Montageverfahren zum Montieren einer Aktuatoreinrichtung gemäß einer Ausführungsform der Erfindung an einem Rotorblatt gemäß einer Ausführungsform der Erfindung bereitgestellt, wobei das Verfahren ein Anbringen der Aktuatorkomponente an einem Windenergieanlagen-Rotorblatt und/oder ein Verbinden der Steuerungskomponente mit der Aktuatorkomponente umfasst.

Es sollte verstanden werden, dass die Aktuatoreinrichtung nach Anspruch 1, das Rotorblatt nach Anspruch 11, die Windenergieanlage nach Anspruch 14 und das Montageverfahren nach Anspruch 15 ähnliche und/oder identische bevorzugte Ausführungsformen aufweisen, wie sie insbesondere in den abhängigen Ansprüchen definiert sind.

Die vorliegende Erfindung wird nun nachfolgend exemplarisch anhand von Ausführungsbeispielen unter Bezugnahme auf die begleitenden Figuren näher erläutert.
- Fig. 1a: zeigt eine schematische Ansicht einer Windenergieanlage.
- Fig. 1b: zeigt eine schematische Ansicht einer bekannten Aktuatoreinrichtung.
- Fig. 2: zeigt eine schematische Ansicht eines Ausführungsbeispiels einer Aktuatoreinrichtung.
- Fig. 3: zeigt eine schematische Ansicht eines weiteren Ausführungsbeispiels einer Aktuatoreinrichtung.
- Fig. 4: zeigt eine schematische Ansicht eines weiteren Ausführungsbeispiels einer Aktuatoreinrichtung.
- Figuren 5a und 5b: zeigen schematische Draufsichten eines Ausführungsbeispiels einer Aktuatoreinrichtung.
- Fig. 6: zeigt eine schematische Ansicht eines weiteren Ausführungsbeispiels einer Aktuatoreinrichtung.
- Fig. 7: zeigt eine schematische Ansicht eines Ausführungsbeispiels einer Aktuatoreinrichtung an einem Rotorblatt.
- Figuren 8a und 8b: zeigen schematisch Detailansichten des in Fig. 7 gezeigten Ausführungsbeispiels.
- Figuren 9a bis 9d: zeigen schematische Ansichten eines weiteren Ausführungsbeispiels einer Aktuatoreinrichtung.
- Fig. 10: zeigt eine schematische Ansicht eines Ausführungsbeispiels mit Verstärkerrahmen.
- Fig. 11: zeigt schematisch und exemplarisch einen Querschnitt eines Rotorblattes mit einer Auftriebsklappe.
- Fig. 12: zeigt schematisch und exemplarisch eine perspektivische Ansicht eines weiteren Ausführungsbeispiels einer Aktuatoreinrichtung.
- Fig. 13: zeigt schematisch und exemplarisch einen Verlauf der Lichtaustragung aus einem Lichtleiter.
- Fig. 14: zeigt schematisch und exemplarisch ein Beispiel der Anordnung von Lichtleitern.
- Fig. 15: zeigt schematisch und exemplarisch ein weiteres Beispiel der Anordnung von Lichtleitern.
- Fig. 16: zeigt schematisch und exemplarisch den Verlauf eines Lichtleiters, der an dessen distalem Ende eine Nanobeschichtung aufweist.
- Fig. 17: zeigt schematisch und exemplarisch eine perspektivische Ansicht einer Ausführungsform einer Aktuatoreinrichtung.
- Fig. 18: zeigt schematisch und exemplarisch eine perspektivische Ansicht einer Ausführungsform einer Aktuatoreinrichtung.

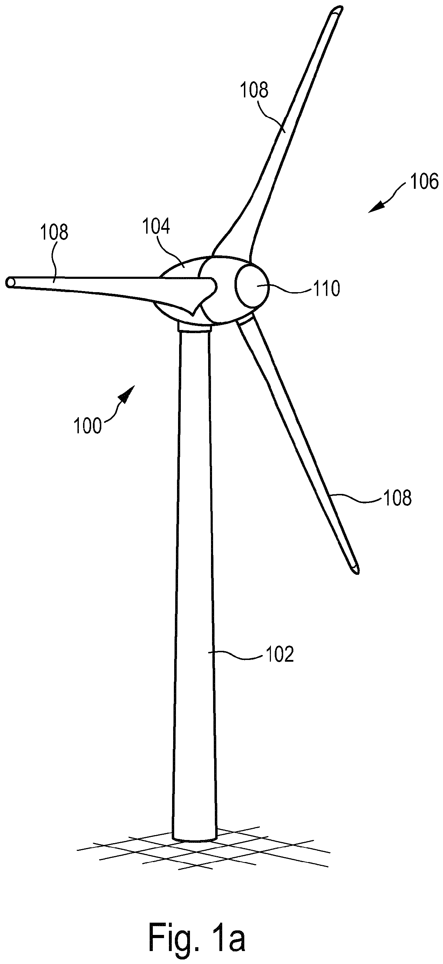

Figur 1a zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

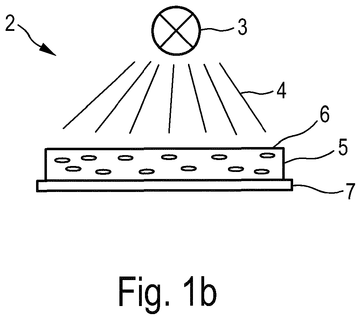

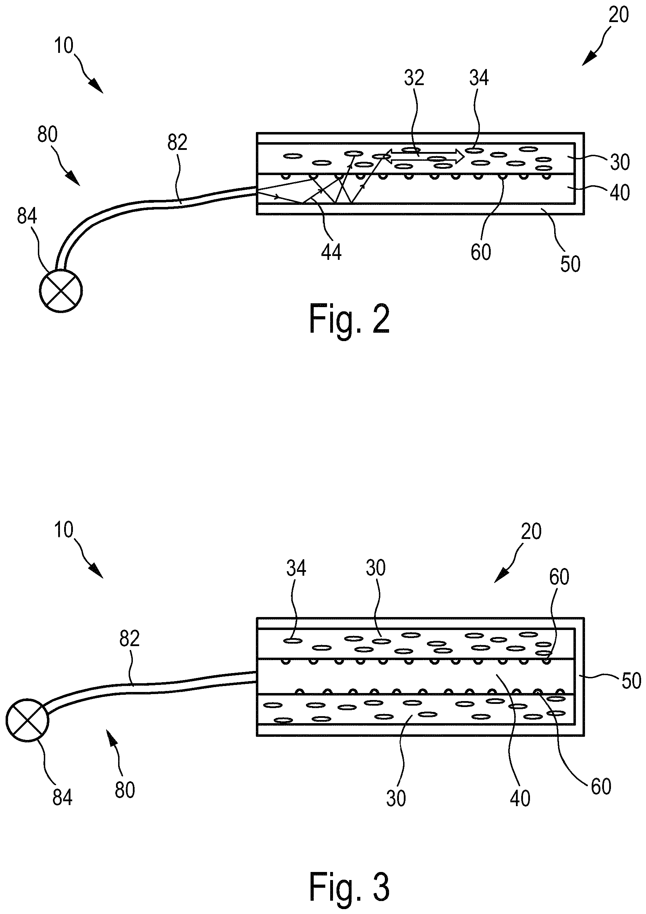

Figur 1b zeigt eine schematische Ansicht einer bekannten Aktuatoreinrichtung 2, bei der mittels einer Lichtquelle 3 Anregungslicht 4 auf eine aktive Schicht 5 geleitet wird. Die aktive Schicht 5 umfasst einen Fotoaktuator 6, der eine Dehnung der Aktuatorschicht 5 basierend auf dem Anregungslicht 4 bewirkt. Die Aktuatorschicht 5 ist auf einem Substrat 7 angebracht. Durch die induzierte Dehnung der Aktuatorschicht 5 kann sich beispielsweise die Schicht 5 einschließlich des Substrates 7 verbiegen. Die Einstrahlung von Anregungslicht 4 der Lichtquelle 3 erfolgt in dem bekannten Beispiel flächig und direkt über die gesamte Aktuatorschicht 5, ohne Verwendung eines Lichtleiters oder Ähnlichem. Figur 2 zeigt schematisch und exemplarisch eine Aktuatoreinrichtung 10, beispielsweise für eine Windenergieanlage 100, wie sie in Figur 1a gezeigt ist. Die Aktuatoreinrichtung 10 weist eine Aktuatorkomponente 20 und eine Steuerungskomponente 80 auf. Die Steuerungskomponente 80 ist vorzugsweise derart ausgebildet, dass sie die Aktuatorik der Aktuatorkomponente 20 steuert.

Die Aktuatorkomponente 20 weist in diesem Beispiel eine Aktuatorschicht 30 mit einer Vorzugsrichtung 32, in dem Beispiel horizontal gezeigt, auf. Die Aktuatorschicht 30 weist einen Photoaktuator 34 auf, der dazu eingerichtet ist, eine Dehnung und/oder Spannung der Aktuatorschicht 30 in der Vorzugsrichtung 32 zu verändern, in Abhängigkeit von Licht, das in die Aktuatorschicht 30 eingestrahlt wird. Bei der Aktuatorschicht 30 handelt es sich beispielsweise um eine Harzmatrix mit eingebetteten anisotropen Kristallen als Photoaktuator 34. Die Vorzugsrichtung 32 und die Photoaktuatoren 34 sind selbstverständlich nur beispielhaft gewählt, in anderen Ausführungsbeispielen sind andere Materialien denkbar und/oder andere Vorzugsrichtungen denkbar.

Im Wesentlichen parallel zu der Aktuatorschicht 30 weist die Aktuatorkomponente 20 ferner eine anregende Schicht 40 auf. Die anregende Schicht 40 ist dazu eingerichtet, Anregungslicht 44 in die Aktuatorschicht 30 zu leiten. In dem Beispiel der Figur 2 leitet die anregende Schicht 40 Anregungslicht 44 über die gesamte Länge der Aktuatorkomponente 20 und der Aktuatorschicht 30, welche der Vorzugsrichtung 32 entspricht, ein. Die anregende Schicht 40 kann beispielsweise ultradünnes Glas bzw. ein Polymer aufweisen und in einer Dicke von vorzugsweise 20 bis 100 µm ausgebildet sein.

Die Steuerungskomponente 80 weist einen Lichtleiter 82 und einen Lichtquelle 84 auf. Die Lichtquelle 84 ist entfernt von der Aktuatorkomponente 20 angeordnet und der Lichtleiter 82 ist dazu eingerichtet, von der Lichtquelle 84 emittiertes Licht in die anregende Schicht 40 zu leiten. Die Lichtquelle 84 kann dazu eingerichtet sein, Licht einer oder mehrerer Wellenlängen zu emittieren. Die Wellenlängen des emittierten Lichtes entsprechen vorzugsweise einer oder mehreren Wellenlängen von Licht, das geeignet ist, den Photoaktuator 34 zu aktivieren. In anderen Ausführungsbeispielen kann die Wellenlänge des von der Lichtquelle 84 emittierten Lichtes auch von der Wellenlänge abweichen, die der Photoaktuator 34 zur Aktivierung benötigt. Beispielsweise kann dann ein Konversionselement (nicht gezeigt) in der anregenden Schicht 40 vorgesehen sein, beispielsweise ein Element, das ein fluoreszierendes oder phosphoreszierendes Material aufweist.

In Figur 2 ist weiter eine Verspiegelung 50 gezeigt, welche die Aktuatorkomponente 20 an mehreren Seitenflächen umschließt und dazu eingerichtet ist, das Anregungslicht 44 zu reflektieren. Die Verspiegelung 50 sorgt dafür, dass ein Großteil des über den Lichtleiter 82 in die anregende Schicht eingeleiteten Lichtes zur Anregung der Aktuatorschicht 30 nutzbar ist. In anderen Ausführungsbeispielen ist die Verspiegelung 50 nur teilweise, insbesondere an der Seite der anregenden Schicht 40, welche der Aktuatorschicht 30 gegenüberliegt, vorgesehen.

In Figur 2 ist ferner ein Diffusionselement 60 gezeigt, welches zwischen Aktuatorschicht 30 und anregender Schicht 40 vorgesehen ist und dazu eingerichtet ist, Anregungslicht 44 in die Aktuatorschicht 30 diffus einzuleiten. Das Diffusionselement 60 kann beispielsweise als Oberflächenunregelmäßigkeiten der anregenden Schicht 40 ausgebildet sein, insbesondere als gelaserte und/oder geätzte Mikrokavitäten. In anderen Ausführungsbeispielen kann das Diffusionselement 60 auch als Teil der Aktuatorschicht 30 oder als eigenständiges Element ausgebildet sein.

Figur 3 zeigt schematisch und exemplarisch ein weiteres Ausführungsbeispiel einer Aktuatoreinrichtung 10. Die in Figur 3 gezeigte Aktuatoreinrichtung weist zwei parallele Aktuatorschichten 30 mit einer dazwischenliegenden anregenden Schicht 40 auf. Licht aus der anregenden Schicht 40 kann somit entweder nach oben oder nach unten in eine der beiden Aktuatorschichten 30 eintreten. Die Aktuatorschichten 30 können entweder gleich oder voneinander verschieden sein, beispielsweise Photoaktuatoren aufweisen, die gleiche oder verschiedene Anregungscharakteristiken haben. Die Vorzugsrichtung beider Aktuatorschichten 30 kann gleich oder unterschiedlich sein.

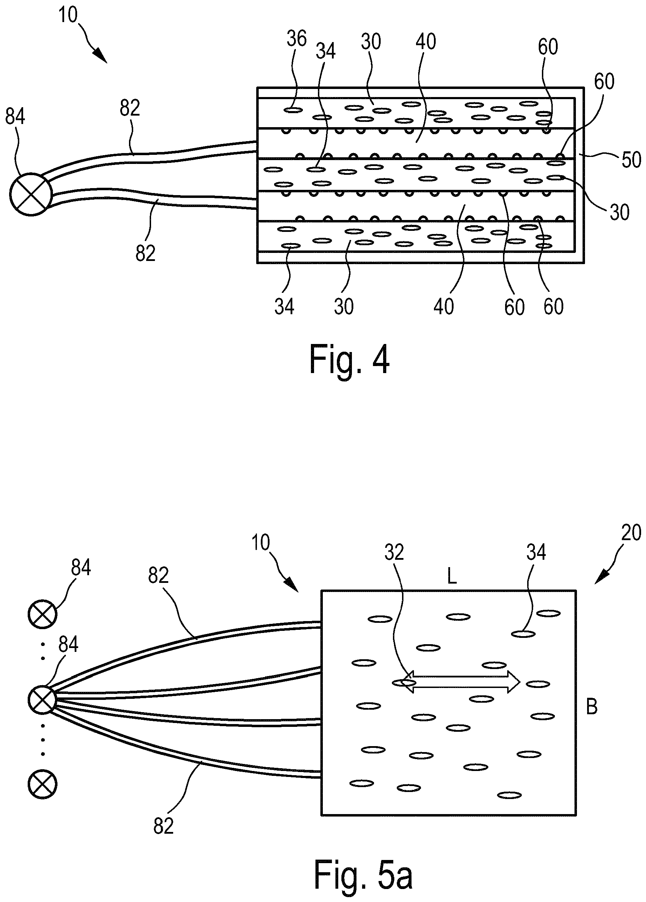

Figur 4 zeigt schematisch und exemplarisch ein weiteres Ausführungsbeispiel einer Aktuatoreinrichtung 10 mit drei Aktuatorschichten 30 und parallel dazu zwei dazwischenliegenden anregenden Schichten 40. Jede der anregenden Schichten 40 ist über einen Lichtleiter 82 mit der Lichtquelle 84 verbunden. In weiteren Beispielen können beliebig viele, auf diese Weise gestapelte Anordnungen von Aktuatorschichten 30 und anregenden Schichten 40 entworfen werden. Bei dieser Form gestapelter Schichtanordnungen verläuft die Vorzugsrichtung vorzugsweise entlang der Stapelungsrichtung, sodass der Stapel dicker bzw. dünner wird, wenn die Aktuatorschicht 30 bzw. die Aktuatorschichten 30 angeregt werden. Somit kann nämlich der Aktuatorweg einer einzelnen Aktuatorschicht 30 überdie gesamte Aktuatoreinrichtung 10 vergrößert werden, da fürjede der Aktuatorschichten 30 ein Beitrag zum Wachsen, das heißt zur Ausdehnung, der Aktuatorkomponente 20 auftritt.

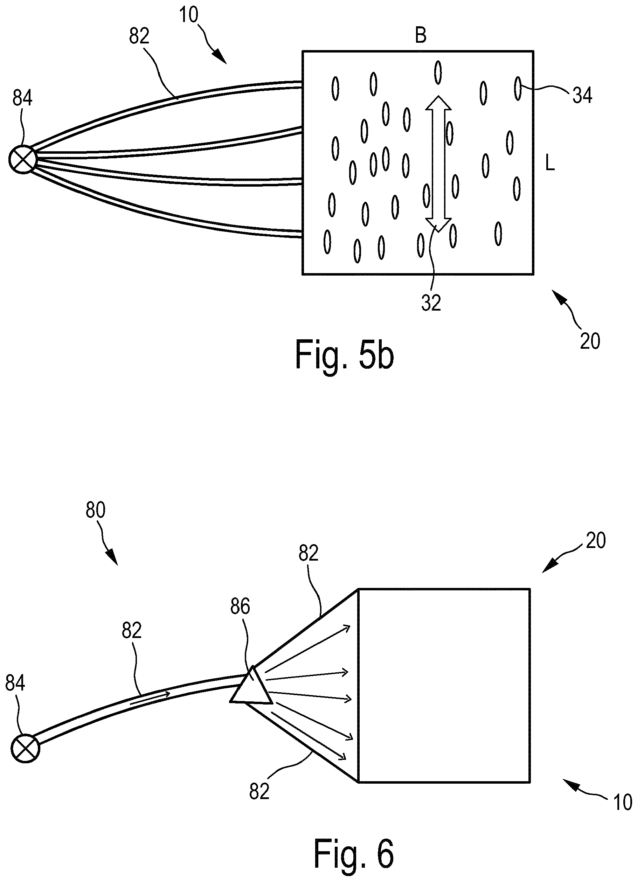

Figuren 5a und 5b zeigen schematisch und exemplarisch Draufsichten auf eine Aktuatoreinrichtung 10 bzw. eine Aktuatorschicht 30 mit Photoaktuator 34 davon. Figur 5a unterscheidet sich von Figur 5b in der Vorzugsrichtung, bzw. der Anisotropie des Photoaktuators 34. Mit L ist die Ausdehnungsrichtung der Aktuatorkomponente 20 bezeichnet, welche der Vorzugsrichtung 32 entspricht, in welcher die Aktuatorschicht 30 auf Anregung eine Streckung, bzw. Stauchung, erfährt. Senkrecht dazu ist die Breite B gezeigt, welche im Wesentlichen keine Änderung erfährt. Figur 5a zeigt den Fall, bei dem die Lichteinleitung mittels Lichtleiter 82 über die Breitenrichtung B verteilt erfolgt, das heißt, die Ausdehnung in Vorzugsrichtung 32 erfolgt in Richtung der Lichteinleitung 82. In dem anderen, in Figur 5b gezeigten Fall, wird die Lichteinleitung mittels Lichtleiter 82 über die Längsrichtung L der Aktuatorkomponente 20 bewirkt, das heißt, die Ausdehnung in Vorzugsrichtung 32 erfolgt senkrecht zu der Lichteinleitung.

Auch Kombinationen der Lichteinleitung sowohl in Längen- als auch in Breitenrichtung sind vorstellbar. In anderen Ausführungsbeispielen ist die Aktuatorkomponente 20 bei Aktivierung sowohl in Längsrichtung L als auch in Breitenrichtung B invariant und die Auszählung erfolgt senkrecht dazu, beispielsweise in Dickenrichtung des in Figur 3, bzw. 4 gezeigten Stapels von Schichten.

Figur 6 zeigt ein weiteres Ausführungsbeispiel einer Aktuatoreinrichtung 10 schematisch und exemplarisch. Vor dem Eintritt in die Aktuatorkomponente 20 weist die Steuerungskomponente 80 in dem Lichtleiter 82 ein optisches Element 86 zur Strahlfächerung auf. Während in dem Beispiel ein eintreffender Strahl 82 in das optische Element 86 eintritt, tritt ein breiter Fächer von optischen Strahlen aus dem optischen Element 86 aus. Der Fächer von Strahlen kann beispielsweise mittels mehrerer Lichtleiter 82 auf Ausgangsseite in die Aktuatorkomponente 20 eingeleitet werden. Das optische Element 86 ist beispielsweise ein Prisma oder Ähnliches.

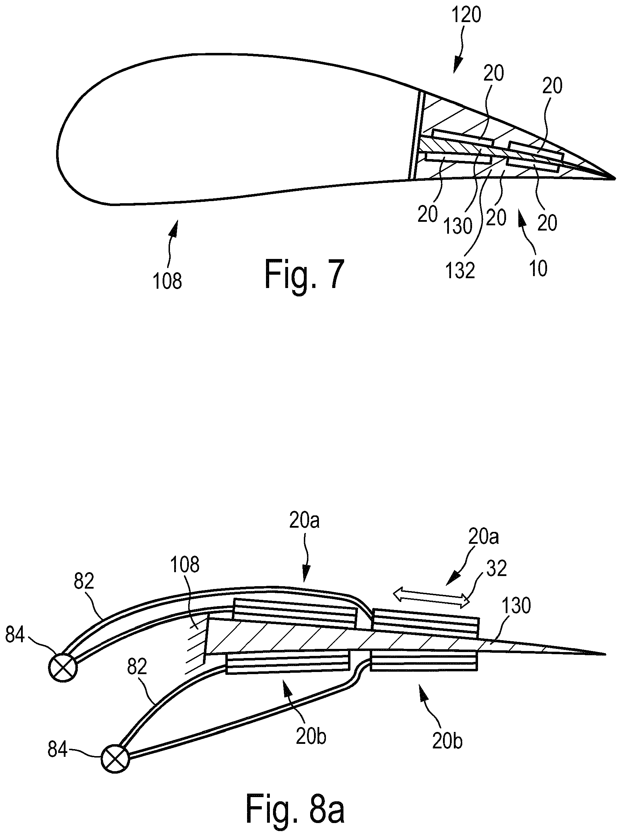

Figur 7 zeigt schematisch und exemplarisch ein Ausführungsbeispiel der erfindungsgemäßen Aktuatoreinrichtung 10, die in einem Hinterkantenbereich 120 eines Rotorblattes 108 einer Windenergieanlage eingesetzt ist und zur Verwirklichung der Ansteuerung einer Servoklappe ausgelegt ist. Figur 7 zeigt das Profil des Windenergieanlagenrotorblattes 108 im Querschnitt. Der Hinterkantenbereich 120 weist in diesem Ausführungsbeispiel ein Trägersubstrat 130, das im Wesentlichen in der Mitte des Profils angeordnet ist, auf. Um das Trägersubstrat 130 herum sind sowohl auf der oberen Seite als auch auf der unteren Seite in dem Beispiel vier Aktuatorkomponenten 20 angeordnet. Die Aktuatorkomponenten 20 sind in diesem Beispiel flächige Aktuatoren, die eine Biegung der gesamten Aktuatorkomponente 20 bewirken. Zur Formgebung, und um das Profil des Hinterkantenbereiches 120 zu vervollständigen, sind das Trägersubstrat 130 und die Aktuatorkomponenten 20 mit einem elastischen Formmaterial 132 eingeschlossen.

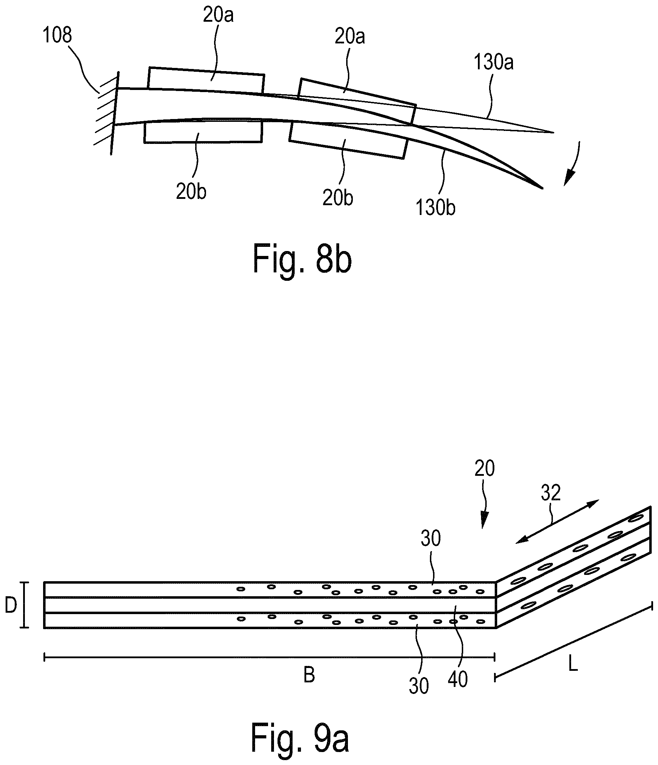

Die Funktionsweise der in Figur 7 gezeigten Hinterkanten-Klappe 120 wird mit Verweis auf Figuren 8a und 8b im Detail gezeigt. Figuren 8a und 8b zeigen den Hinterkanten- bzw. Klappenbereich 120 vergrößert und ohne das elastische Formmaterial 132 im Profil. Das Trägersubstrat 130, das beispielsweise ein GFK-Material oder ähnliches Material aufweist oder daraus besteht, ist in Figur 8a in einer neutralen Position gezeigt. Das heißt, das Trägersubstrat 130 ist nicht ausgelenkt, was einer neutralen Klappenstellung entspricht. Sowohl auf der Oberseite als auch auf der Unterseite, das heißt, bezogen auf das Rotorblatt 108, sowohl auf der Saugseite als auch auf der Druckseite, weist das Trägersubstrat 130 je zwei Aktuatorkomponenten 20a, bzw. 20b auf. Die Vorzugsrichtung 32 der jeweiligen Aktuatorkomponenten 20a, 20b verläuft in Richtung der Profilsehne des Rotorblattes 108. Das Trägersubstrat 130 ist an dem vorderen Ende, das heißt, dem Ende, das in Richtung der Vorderkante des Rotorblattes 108 zeigt, an dem Rotorblatt 108 befestigt.

Die Aktuatorkomponenten 20a und 20b werden von jeweils einer unabhängigen Lichtquelle 84 angesteuert, da die Ansteuerung der Aktuatorkomponenten 20a von der Ansteuerung der Aktuatorkomponenten 20b unterschiedlich sein kann, wie im Folgenden weiter beschrieben wird. Indem die Aktuatorkomponenten 20a auf der Saugseite angeregt werden, in Vorzugsrichtung 32 eine Dehnung vorzunehmen, erfährt das Trägersubstrat 130 eine Biegung, was dem Übergang von der Position 130a zu der Position 130b in Figur 8b entspricht. In einer bevorzugten Ausführungsform werden die Aktuatorkomponenten 20b zeitgleich derart angesteuert, dass sie zur gleichen Zeit eine Stauchung erfahren. Somit muss die Biegung des Trägersubstrats 130 nicht gegen die Aktuatorkomponenten 20b, sondern kann im Gegensatz dazu sogar mit deren Unterstützung erfolgen. Für den umgekehrten Vorgang, das heißt den Übergang des Trägersubstrats von der gebogenen Position 130b zu der neutralen Position 130a, ist eine umgekehrte Ansteuerung der Aktuatorkomponenten 20b, bzw. 20a notwendig. Beispielsweise können die Aktuatorkomponenten 20a derart angesteuert werden, dass sie eine Stauchung erfahren. Alternativ oder vorzugsweise zusätzlich dazu können die Aktuatorkomponenten 20b angesteuert werden, eine Dehnung zu erfahren. In Figur 8 sind die Aktuatorkomponenten 20 beispielhaft aus drei Schichten, zwei Aktuatorschichten mit einer dazwischen angeordneten anregenden Schicht, gezeigt. Es ist selbstverständlich, dass in anderen Ausführungsbeispielen auch andere Ausgestaltungen der Aktuatorkomponente 20 eingesetzt werden können.

In allen Ausführungsformen umfasst eine Ansteuerung, insbesondere durch die Steuerkomponente 80, vorzugsweise eine Beleuchtung, eine Nichtbeleuchtung oder jede Beliebige Kombination oder Zwischenstufe aus Beleuchtung und Nichtbeleuchtung, beispielsweise eine Beleuchtung mit einer verringerten Intensität, mit Modulationen, variablen Mustern, Wellenlängen etc. Eine zeitgleiche Ansteuerung mehrerer Aktuatorkomponenten umfasst demnach beispielsweise auch eine zeitgleiche Ansteuerung durch Beleuchtung, durch Nichtbeleuchtung oder durch jede der eben erwähnten Kombinationen.

Figur 9a bis 9d zeigen ein weiteres Ausführungsbeispiel einer Aktuatoreinrichtung 10 mit einer Vorzugsrichtung 32, die senkrecht auf der Richtung steht, mit der der Lichtleiter 82 Licht in die anregende Schicht 40 einleitet.

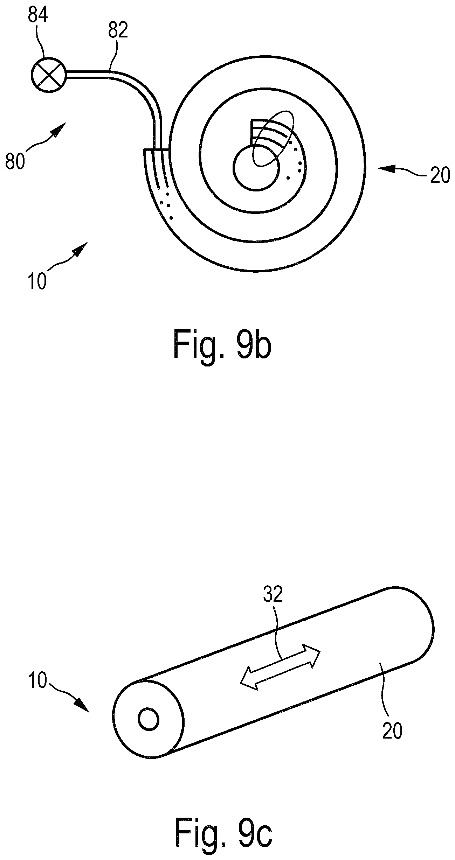

Figur 9a zeigt schematisch eine flächig ausgestaltete Aktuatorkomponente 20 mit zwei Aktuatorschichten 30 und einer dazwischenliegenden anregenden Schicht 40. Die Vorzugsrichtung 32 entspricht einer als L definierten Längsrichtung, die einzelnen Schichten der Aktuatorkomponente 20 sind in einer Dicke in Richtung D gestapelt und die flächige Ausdehnung der Aktuatorkomponente umfasst neben der Längsrichtung L auch eine Breitenrichtung B. Figur 9b zeigt nun, wie die in Figur 9a gezeigte Aktuatorkomponente 20 entlang der Breitenrichtung B aufgerollt wird. Die Vorzugsrichtung 32 ändert sich dabei nicht, das heißt, sie verläuft immer noch in Längsrichtung L in Figur 9b senkrecht zu der Zeichenebene. Dies ist perspektivisch in Figur 9c gezeigt. Im Vergleich zu der Darstellung der Figur 9a ist klar erkennbar, dass die Aktuatoreinrichtung 10 in Breitenrichtung B weniger Ausdehnung erfordert. Somit kann ein Aktuator realisiert werden, der die gleiche Aktuatorwirkung bereitstellt, wie der in Figur 9a gezeigte, flächige Aktuator, wobei er allerdings nur einen Bruchteil der Grundfläche benötigt. Dies ist besonders für platzkritische Anwendungen vorteilhaft.

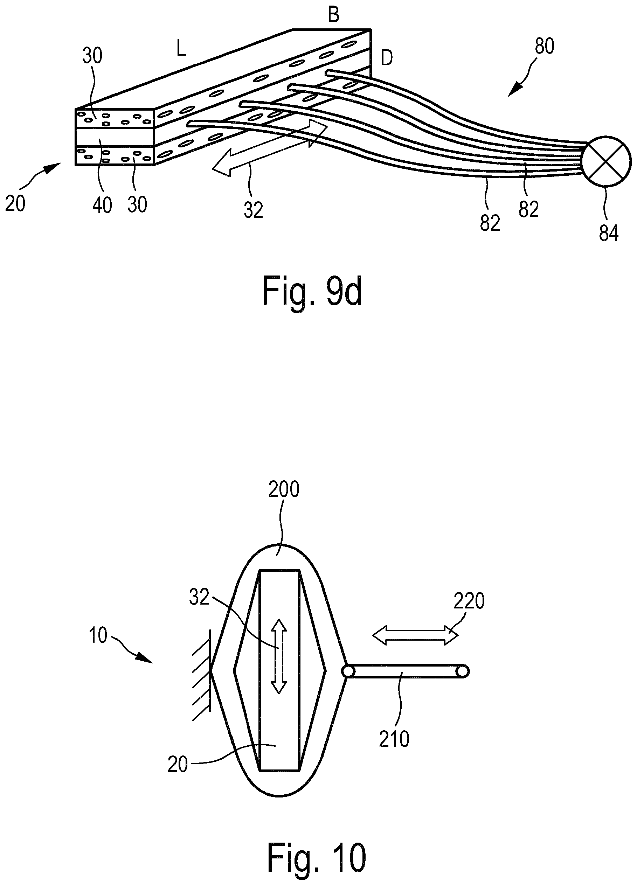

In Figur 9d ist ein Ausschnitt der in Figur 9a gezeigten Aktuatorkomponente 20 schematisch und perspektivisch unter Darstellung des Anschlusses der Steuerungskomponente 80 einschließlich Lichtquelle 84 und mehrerer Lichtleiter 82, die an verschiedenen Positionen in Längsrichtung L Licht in die anregende Schicht 40 einleiten, gezeigt.

Figur 10 zeigt schematisch und exemplarisch ein Ausführungsbeispiel der Aktuatoreinrichtung 10, mit einem Verstärkerrahmen 200 zur Übersetzung der Aktuatorbewegung in Vorzugsrichtung 32. In diesem Ausführungsbeispiel ist die Aktuatorkomponente 20 vorzugsweise als Stapel von Schichten ausgestaltet, wobei die Vorzugsrichtung 32 entsprechend der Stapelrichtung der Schichten ist. Der Verstärkerrahmen 200 übersetzt die Bewegung in Vorzugsrichtung 32 dahingehend, dass eine im Wesentlichen senkrecht darauf stehende Aktuatorrichtung 220 mit einstellbarem Übersetzungsverhältnis resultiert. Beispielsweise kann dadurch eine Schub-Zugstange 210 über einen deutlich größeren Weg in der Aktuatorrichtung 220 bewegt werden, als sich die Aktuatorkomponente 20 in der Vorzugsrichtung 32 dehnt, bzw. staucht. Die Auslegung des Aktuators ist ähnlich zu der bekannten Auslegung eines Piezo-Stacks, typische Verstärkungsfaktoren für Verstärkerrahmen 200 bewegen sich in dem Bereich um 5. Das heißt, dass eine Dehnung um beispielsweise 100 µm in Vorzugsrichtung 32 in einer Dehnung um beispielsweise 500 µm entlang der Aktuatorrichtung 220 resultiert. Der Verstärkerrahmen 200 ist nur ein Beispiel für eine Übersetzungseinrichtung und auch die Schub-/Zugstange 210 ist nur ein Beispiel für ein Koppelelement, auch andere Umsetzungen sind dem Fachmann bekannt.

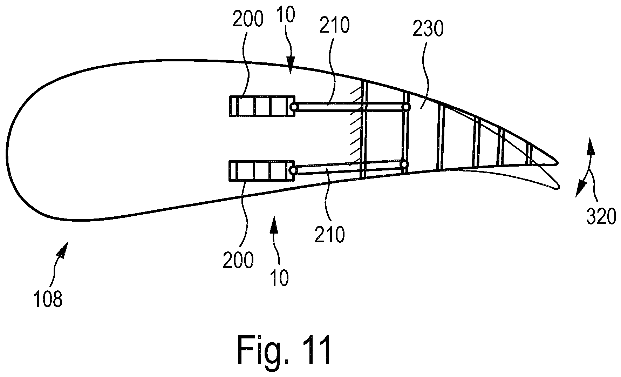

Figur 11 zeigt schematisch und exemplarisch einen Querschnitt eines Rotorblattes 108 mit einer Auftriebsklappe 230, die durch zwei Aktuatoreinrichtungen 10, wie sie beispielsweise in Figur 10 gezeigt sind, gesteuert wird. Jeder der Aktuatoreinrichtungen 10 weist den Verstärkungsrahmen 200 auf und bewirkt eine Ansteuerung der Schub-Zugstangen 210, sodass die Klappe 230 entlang einer Auslenkungsrichtung 320 ausgelenkt wird. Im Vergleich mit einer Servoklappe verbiet sich die Auftriebsklappe 230 im Wesentlichen nicht, sondern wird als Ganze mechanisch verlagert. Hierzu werden vorzugsweise die beiden Schub-Zugstangen 210 in entgegengesetzten Richtungen bewegt, sodass es zu einer Kippung der Klappe 230 in Richtung 320 kommt. Obwohl in diesem Beispiel Schub-Zugstangen 210 als Kraftüberträger zum Einsatz kommen, sind in anderen Ausführungsbeispielen natürlich auch sämtliche anderen mechanischen Implementierungen vorstellbar.

Obwohl beispielsweise Auftriebsklappen und Servoklappen als aktive Elemente in Ausführungsbeispielen beschrieben wurden, sind die obigen Vorteile auch für andere aktive Elemente, beispielsweise Vortex-Generatoren und Ähnliches, erreichbar. Auch Kombination, wie beispielsweise eine kombinierte Auftriebs- und Servoklappe, sind vorteilhaft vorstellbar.

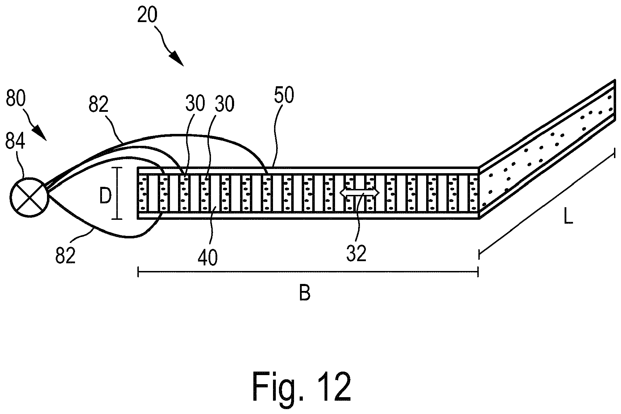

Figur 12 zeigt schematisch ein weiteres Ausführungsbeispiel einer flächig ausgestalteten Aktuatorkomponente 20, wie sie beispielsweise in Figur 9a gezeigt ist. Figur 12 zeigt einen flächigen Aktuator, bei dem die Schichtausdehnung der Aktuatorschichten 30 und anregenden Schichten 40 senkrecht auf der Aktuatorfläche steht, mit der der Aktuator in Verbindung mit einem Substrat, beispielsweise einem Teil des Rotorblattes der Windenergieanlage, ist. Die Ausführungsform kann somit als ein Stapelaktuator angesehen werden, von dem eine dünne Scheibe mit einer Dicke D abgeschnitten wurde, die flach entlang der Breitenrichtung Bund Längenrichtung L ausgelegt ist. Die Anordnung ermöglicht eine Dehnung in Vorzugsrichtung 32, welche in der flächigen Ebene liegt. Die Vorzugsrichtung 32 liegt senkrecht auf der Aktuatorschicht 30, die entlang der Vorzugsrichtung 32 gestapelt sind. In diesem Ausführungsbeispiel umfasst die Aktuatorkomponente 20 ferner eine Verspiegelung 50, die als Reflektionsschicht wirkt und für eine optimierte Einleitung des Anregungslichts aus den Lichtleitern 82 in die anregenden Schichten 40 sorgt.

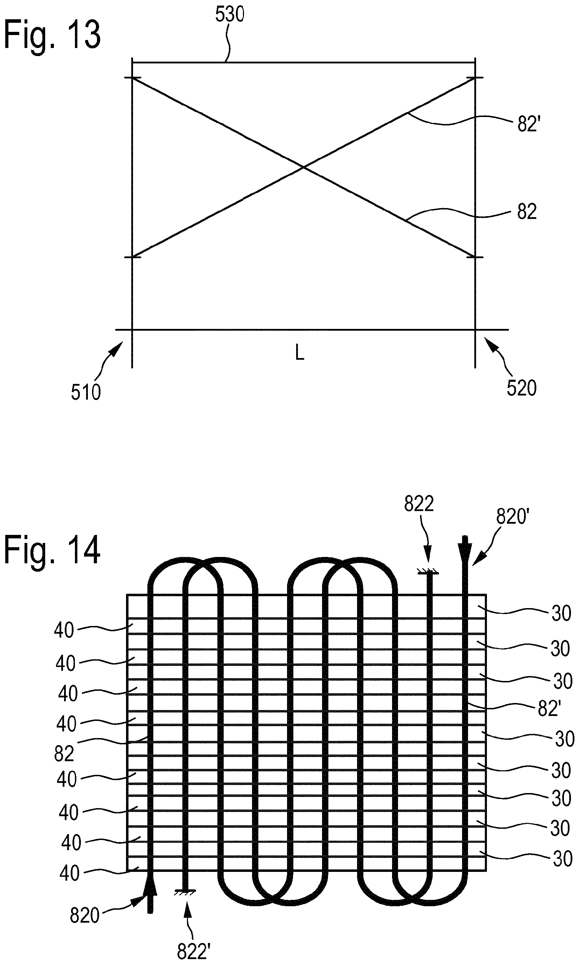

Fig. 13 zeigt schematisch und exemplarisch einen Verlauf der Lichtaustragung aus einem Lichtleiter 82. Die Lichtausbeute wird auf der vertikalen Achse dargestellt, während der Verlauf über eine Länge L des Lichtleiters 82 auf der horizontalen x-Achse dargestellt ist. Der Verlauf geht von einem Eintrittspunkt 510 des Lichtleiters 82 durch die anregende Schicht 40 bis zu einem Endpunkt 520, an dem der Lichtleiter 82 endet. Es kann gesehen werden, dass die Lichtausbeute in diesem vereinfachten Beispiel linear mit der Länge durch die anregende Schicht 40 abnimmt.

In Fig. 13 ist zusätzlich die Lichtausbeute eines entgegengesetzt ausgerichteten Lichtleiters 82' dargestellt. Der Lichtleiter 82' hat somit die höchste Lichtausbeute an dem Endpunkt 520 des ersten Lichtleiters 82, an dem der zweite Lichtleiter 82' in die anregende Schicht 40 geführt wird. Er verläuft somit im Wesentlichen entgegengesetzt zu dem Lichtleiter 82. Wenn der Lichtleiter 82 und der Lichtleiter 82' in Umgebung voneinander in der anregenden Schicht 40 geführt werden, ergibt sich ein Gesamtlichteintrag 530, der im Wesentlichen über die gesamte Länge L konstant ist. Die erfindungsgemäße Lösung besteht genau darin, dass das Absinken der Lichtausbeute in einem der Lichtleiter 82, 82' dadurch kompensiert wird, das ein weiterer, in der unmittelbaren Umgebung diese Lichtleiters angeordnete Lichtleiter im Wesentlichen entgegengesetzt ausgeführt ist.

Ein Beispiel einer möglichen Anordnung zweier derartiger Lichtleiter 82, 82' ist schematisch mit Verweis auf Fig. 14 gezeigt. Über die Vielzahl an Kanten der anregenden Schichten 40 einer Seitenfläche eines Aktuatorstapels sind in diesem Ausführungsbeispiel zwei Lichteiter 82, 82' von einem Eintritt 820, 820' zu einem Austritt 822, 822' geführt. Die beiden Lichtleiter 82, 82' sind dabei mäanderförmig geführt, im Wesentlichen parallel angeordnet und jeweils um eine halbe Schwingung versetzt angeordnet. Anders ausgedrückt, jeweils einer der beiden Lichtleiter 82, 82' erstreckt sich in dem Raum zwischen zwei Schlingen des anderen der Lichtleiter 82, 82'.

In diesem Beispiel ist die Richtungsumkehr der Lichtleiter 82, 82' als außerhalb des Stapels bestehend aus anregenden Schichten 40 und Aktuatorschichten 30 ausgeführt dargestellt, wobei die Richtungsumkehr der Lichtleiter 82, 82' auch beispielsweise innerhalb einer der anregenden Schichten 40 ausgeführt sein kann. Es wird bevorzugt, dass in dem Bereich der Richtungsumlenkung keine Lichtausbeute, beispielsweise durch Leuchtmittel oder andere Oberflächenveränderungen des Lichtleiters 82, 82' erfolgt. Wenn die Richtungsänderungen der Lichtleiter 82, 82' innerhalb der anregenden Schicht 40 ausgebildet sind, kann allerdings auch im Bereich der Umkehrkurven eine derartige Lichtausbeutung beispielsweise durch Leuchtmittel vorgesehen werden. Die Lichtausbeute über die gesamte anregende Schicht entspricht in etwa dem Verlauf 530, wie er in Fig. 13 gezeigt ist, das heißt, dass die Lichtausbeute im Wesentlichen über die gesamte Fläche der anregenden Schicht 40 sowie über sämliche der anregenden Schichten 40 konstant ist.

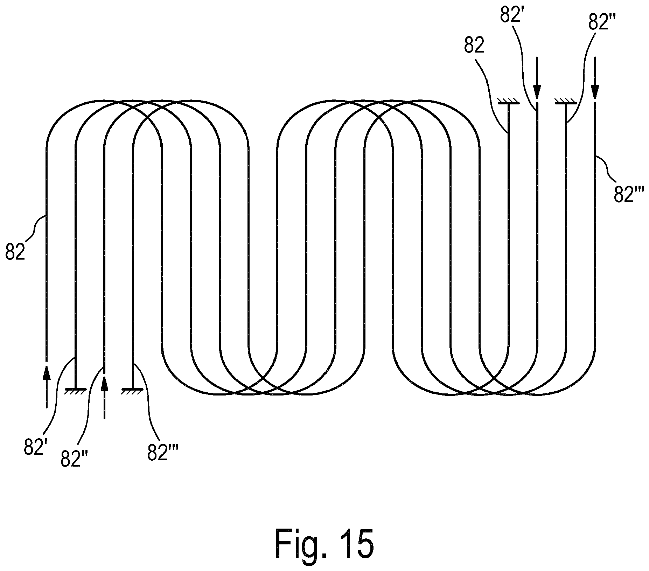

Fig. 15 zeigt schematisch und exemplarisch ein weiteres Beispiel der Anordnung von vier Lichtleitern 82, 82', 82" und 82‴, wobei jeder der Lichtleiter 82 bis 82‴ im Wesentlichen gleich geformt ist und im Vergleich zu dem Ausführungsbeispiel von Fig. 14 in die jeweils zwischen den zwei dort gezeigt Lichtleitern 82, 82' weitere Lichtleiter eingefügt werden. Anstelle der zwei entgegengesetzt parallel geführten Lichtleiter ist in dem Beispiel der Fig. 15 somit die Anordnung von vier derartigen Lichtleitern 82 bis 82‴ vorgesehen, wobei jeweils ein Paar - das heißt Lichtleiter 82 und 82" bzw. 82' und 82‴ - die gleiche Lichtführungsrichtung aufweisen. Durch die Anordnung mit vier Lichtleitern, wie in Fig. 15 gezeigt, ist eine gleichmäßige Ausleuchtung der anregenden Schicht 40 mit jeweils zwei unterschiedlichen Wellenlängen oder zwei Spektralbereichen auf derselben Aktuatorfläche möglich. Vorzugsweise kann eine der Wellenlängen, das heißt Licht einer bestimmten Farbe, eine Aktivierung des Photoaktuators der Aktuatorschicht bewirken, während eine zweite Wellenlänge bzw. Farbe den Photoaktuator deaktiviert. Die Ausführungen von Fig. 14 und Fig. 15 sind natürlich nur als Beispiele zu verstehen, dem Fachmann sind auch andere geometrische Ausführungen, die im Ergebnis eine homogene Lichtausbeute der anregenden Schicht 40 ermöglichen, ohne Schwierigkeiten zugänglich. Dabei sind beliebige geradzahlige Vielfache der zwei gegenläufigen Lichtleiter konfigurierbar.

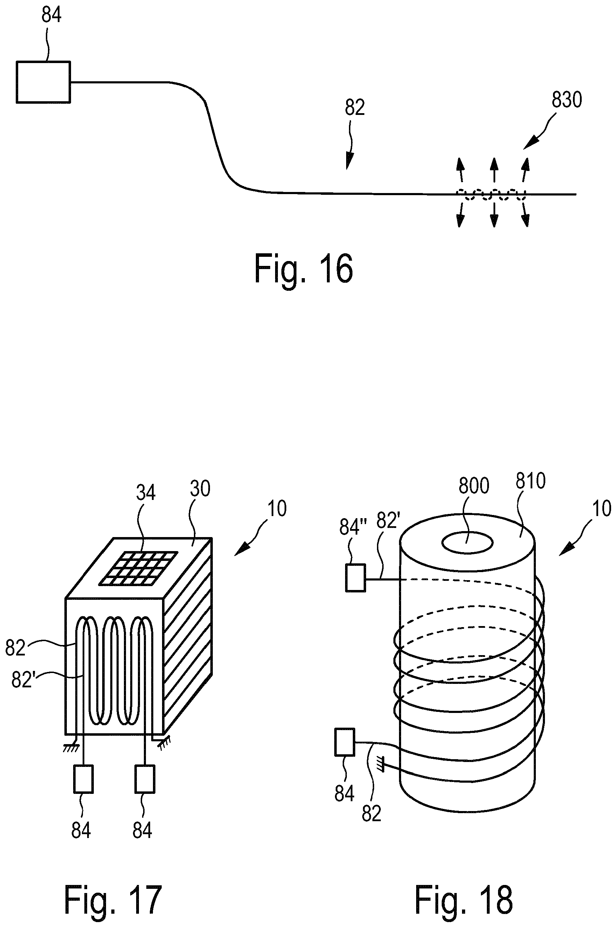

Fig. 16 zeigt schematisch und exemplarisch den Verlauf eines Lichtleiters 82, der an dessen distalem Ende eine Nanobeschichtung 830 aufweist. Die Nanobeschichtung 830 kann beispielsweise in dem Bereich der anregenden Schicht 40 vorgesehen werden. Durch die Nanobeschichtung 830 tritt Licht in dem Bereich, in dem die Nanobeschichtung 830 aufgetragen ist, lichtdiffus in alle Richtungen um die Faser aus. Mit geeigneten Mitteln kann natürlich auch nur ein Lichtaustrag in einem Teil der Raumrichtungen verwirklicht werden.

Fig. 17 zeigt schematisch und exemplarisch eine perspektivische Ansicht einer Ausführungsform einer Aktuatoreinrichtung 10, bei dem mehrere Schichten mit Fotoaktuatoren 34 gestapelt übereinander angeordnet sind. Durch ein Gitter ist in dieser schematischen Ansicht die Struktur unter den Fotoaktuatormolekülen angedeutet, in Wirklichkeit ist die Anordnung natürlich nicht auf diese Gitterstruktur beschränkt. Senkrecht zu der Ausdehnungsrichtung der einzelnen Schichten 30, 40 verläuft in diesem Beispiel ein Lichtleiter mäanderförmig in vertikaler Richtung. Dieses Ausführungsbeispiel kann vorzugsweise mit der Anordnung der Lichtleiter 82 gemäß Fig. 14 bzw. Fig. 15 kombiniert werden, so dass ein gleichmäßiger Lichteintrag über die gesamte Stapelanordnung des Stapelaktuators ermöglicht wird.

Fig. 18 zeigt schließlich ein weiteres Ausführungsbeispiel einer Aktuatoreinrichtung 10, die in diesem Ausführungsbeispiel in Form eines Zylinders mit innenliegender Bohrung 800 ausgestattet ist. Zwei Lichtleiter 82, 82' erstrecken sich spiralförmig entgegengesetzt verlaufend um den Zylinder 810. Während die Wicklung der Lichtleiter 82, 82' in diesem Ausführungsbeispiel außen um den Zylinder 810 gezeigt ist, so ist in einem anderen Ausführungsbeispiel die Lichtführung auch in der Mitte des Zylinders 810 möglich.

## Patentansprüche

1. Aktuatoreinrichtung (10) für eine Windenergieanlage (100), insbesondere für ein Windenergieanlagen-Rotorblatt (108), mit einer Aktuatorkomponente (20) und einer Steuerungskomponente (80),
wobei die Aktuatorkomponente (20) wenigstens eine Aktuatorschicht (30) mit einer Vorzugsrichtung (32) und im Wesentlichen parallel zu der Aktuatorschicht (30) wenigstens eine anregende Schicht (40) aufweist,
wobei die Aktuatorschicht (30) einen Photoaktuator (34) umfasst, wobei der Photoaktuator (34) dazu eingerichtet ist, basierend auf Anregungslicht eine Dehnung und/oder Spannung der Aktuatorschicht (30) in der Vorzugsrichtung (32) zu verändern,
wobei die anregende Schicht (40) dazu eingerichtet ist, Anregungslicht in die Aktuatorschicht (30) zu leiten,
wobei die Steuerungskomponente (80) eine Lichtquelle (84) und einen Lichtleiter (82) umfasst, wobei die Lichtquelle (84) von der anregenden Schicht (40) entfernt angeordnet ist und mittels des Lichtleiters (82) mit der anregenden Schicht (40) verbunden ist, **dadurch gekennzeichnet, dass**
der Lichtleiter (82) in unterschiedlichen, einen gegenläufigen Anteil aufweisenden und insbesondere entgegengesetzten Richtungen durch die anregende Schicht (40) verläuft.

2. Aktuatoreinrichtung (10) nach Anspruch 1, wobei die Aktuatorkomponente (20) als Stapelaktuatorkomponente mit einer Vielzahl gestapelter Aktuatorschichten (30) und anregender Schichten (40) ausgebildet ist, wobei der Lichtleiter (82) über eine Vielzahl von Kanten der anregenden Schichten (40) auf mindestens einer Schichtfläche der Stapelaktuatorkomponente ausgebildet ist.

3. Aktuatoreinrichtung (10) nach einem der vorstehenden Ansprüche, die wenigstens zwei Lichtleiter (82) aufweist, wobei wenigstens zwei der Lichtleiter von unterschiedlichen Seiten in die anregende Schicht (40) eintreten.

4. Aktuatoreinrichtung (10) nach einem der vorstehenden Ansprüche,
wobei als eine Lichtleitrichtung des oder der Lichtleiter (82) die Richtung des Lichtleiters (82) von der Lichtquelle (84) aus bezeichnet wird,
wobei benachbarte Abschnitte unterschiedlicher Lichtleiter (82) in der anregenden Schicht (40) wenigstens teilweise entgegengesetzte Lichtleitrichtungen haben.

5. Aktuartoreinrichtung (10) nach einem der vorstehenden Ansprüche, wobei ein Lichtaustrag aus dem Lichtleiter (82) mit der Länge des Lichtleiters (82) abnimmt, wobei wenigstens zwei Lichtleiter (82) derart in bzw. entlang der anregenden Schicht (40) verlaufen, dass ein gleichmäßiger Lichteintrag in die Aktuatorschicht (30) erfolgt.

6. Aktuartoreinrichtung (10) nach einem der vorstehenden Ansprüche, wobei wenigstens zwei Lichtleiter (82) zumindest abschnittsweise gegenläufig durch die anregende Schicht (40) verlaufen, wobei ein Eintrittspunkt eines ersten der wenigstens zwei Lichtleiter (82) in die anregende Schicht (40) insbesondere benachbart zu einem Austrittspunkt eines zweiten der wenigstens zwei Lichtleiter (82) ist.

7. Aktuatoreinrichtung (10) nach Anspruch 6, wobei die wenigstens zwei Lichtleiter (82) jeweils mäanderförmig durch die bzw. entlang der anregenden Schicht (40) verlaufen, wobei sich in der anregenden Schicht (40) jeweils im Wesentlichen parallele Abschnitte der zwei Lichtleiter (82) abwechseln, wobei sich insbesondere die wenigstens zwei Lichtleiter (82) im Bereich der Mäanderschlingen, in dem sich die Richtung der Lichtleiter (82) im Wesentlichen umkehrt, überlagern.

8. Aktuatoreinrichtung (10) nach einem der vorstehenden Ansprüche, wobei die Aktuatorkomponente eine im Wesentlichen zylindrische Form mit Hohlbohrung im Inneren aufweist, wobei der oder die Lichtleiter (82) im Wesentlichen innerhalb der Hohlbohrung angeordnet ist bzw. sind.

9. Aktuatoreinrichtung (10) nach einem der vorstehenden Ansprüche, wobei der Bereich des von der Lichtquelle (84) entfernten Ende des Lichtleiters eine Nanobeschichtung (830) aufweist.

10. Aktuatoreinrichtung (10) nach einem der vorstehenden Ansprüche, wobei die Steuerungskomponente (80) mehrere Lichtleiter umfasst, wobei die mehreren Lichtleiter dazu konfiguriert sind, unterschiedliche Wellenlängen und/oder Spektralbereiche zu leiten.

11. Rotorblatt (108) einer Windenergieanlage (100) mit einer Aktuatoreinrichtung (10) nach einem der Ansprüche 1 bis 10 und einem aktiven Element (120, 230), wobei die Aktuatoreinrichtung (10) zur Steuerung des aktiven Elementes (120, 230) eingerichtet ist.

12. Rotorblatt nach Anspruch 11, wobei
die Aktuatorkomponente (20) der Aktuatoreinrichtung (10) als Biegeaktuatorkomponente ausgestaltet ist und wobei
das aktive Element als Servoklappe (120) ausgestaltet ist, wobei
die Aktuatorkomponente (20) flächig über den Bereich der Servoklappe (120) montiert ist.

13. Rotorblatt nach Anspruch 11, wobei
die Aktuatorkomponente (20) der Aktuatoreinrichtung (10) als Dehnungsaktuatorkomponente ausgestaltet ist und wobei
das aktive Element als Auftriebsklappe (230) ausgestaltet ist, wobei
das Rotorblatt (108) ferner eine Übersetzungseinheit (200, 210) zum Übersetzen der Bewegung der Aktuatorkomponente (20) in eine Steuerung der Auftriebsklappe (230) aufweist, wobei
die Aktuatoreinrichtung (10) insbesondere einen Verstärkungsrahmen aufweist, welcher die Aktuatorkomponente umschließt, wobei
die Übersetzungseinheit eine Schub-/Zugstange zur Kopplung des Verstärkungsrahmens an die Auftriebsklappe aufweist.

14. Windenergieanlage (100) mit einem Rotorblatt nach einem der Ansprüche 11 bis 13.

15. Montageverfahren zum Montieren einer Aktuatoreinrichtung (10) nach einem der Ansprüche 1 bis 10 an einem Rotorblatt (108) nach einem der Ansprüche 11 bis 13, wobei das Verfahren ein Anbringen der Aktuatorkomponente (20) an dem Rotorblatt (108) und/oder ein Verbinden der Steuerungskomponente (80) mit der Aktuatorkomponente (20) umfasst.

## Claims

1. An actuator device (10) for a wind turbine (100), in particular for a rotor blade (108) of a wind turbine, with an actuator component (20) and a control component (80),
wherein the actuator component (20) has at least one actuator layer (30) with a preferential direction (32) and, substantially parallel to the actuator layer (30), at least one exciting layer (40),
wherein the actuator layer (30) comprises a photoactuator (34), wherein the photoactuator (34) is designed to change a strain and/or stress of the actuator layer (30) in the preferential direction (32) on the basis of excitation light,
wherein the exciting layer (40) is designed to guide excitation light into the actuator layer (30),
wherein the control component (80) comprises a light source (84) and a light guide (82), wherein the light source (84) is arranged away from the exciting layer (40) and is connected to the exciting layer (40) by means of the light guide (82), **characterized in that**
the light guide (82) runs through the exciting layer (40) in different directions, which have a counter-running element and are in particular opposite.

2. The actuator device (10) as claimed in claim 1, wherein the actuator component (20) is formed as a stack actuator component with a multiplicity of stacked actuator layers (30) and exciting layers (40), wherein the light guide (82) is formed over a multiplicity of edges of the exciting layers (40) on at least one layer surface of the stack actuator component.

3. The actuator device (10) as claimed in one of the preceding claims, which has at least two light guides (82), wherein at least two of the light guides enter the exciting layer (40) from different sides.

4. The actuator device (10) as claimed in one of the preceding claims, wherein the direction of the light guide (82) from the light source (84) is referred to as a light guiding direction of the light guide or guides (82), wherein adjacent portions of different light guides (82) in the exciting layer (40) have at least partially opposite light guiding directions.

5. The actuator device (10) as claimed in one of the preceding claims, wherein a light output from the light guide (82) decreases with the length of the light guide (82), wherein at least two light guides (82) run in or along the exciting layer (40) in such a way that a uniform light input into the actuator layer (30) takes place.

6. The actuator device (10) as claimed in one of the preceding claims, wherein at least two light guides (82) run counter to one another, at least in certain portions, through the exciting layer (40) wherein an entry point of a first of the at least two light guides (82) into the exciting layer (40) is adjacent to an exit point of a second of the at least two light guides (82).

7. The actuator device (10) as claimed in claim 6, wherein the at least two light guides (82) respectively run in a meandering form through or along the exciting layer (40), wherein substantially parallel portions of the two light guides (82) respectively alternate in the exciting layer (40), wherein the at least two light guides (82) are overlaid in the region of the loops of the meander in which the direction of the light guides (82) is substantially reversed.

8. The actuator device (10) as claimed in one of the preceding claims, wherein the actuator component has a substantially cylindrical form with a hollow bore in the interior, wherein the light guide or guides (82) is or are arranged substantially within the hollow bore.

9. The actuator device (10) as claimed in one of the preceding claims, wherein the region of the end of the light guide remote from the light source (84) has a nano coating (830).

10. The actuator device (10) as claimed in one of the preceding claims, wherein the control component (80) comprises multiple light guides, wherein the multiple light guides are configured to guide different wavelengths and/or spectral ranges.

11. A rotor blade (108) of a wind turbine (100) with an actuator device (10) as claimed in one of claims 1 to 12 and an active element (120, 230), wherein the actuator device (10) is designed for controlling the active element (120, 230).

12. The rotor blade as claimed in claim 11, wherein
the actuator component (20) of the actuator device (10) is configured as a bending actuator component and wherein
the active element is configured as a servo flap (120), wherein
the actuator component (20) is mounted in surface contact over the region of the servo flap (120).

13. The rotor blade as claimed in claim 11, wherein
the actuator component (20) of the actuator device (10) is configured as an extension actuator component and wherein
the active element is configured as a lift flap (230), wherein
the rotor blade (108) also has a transforming unit (200, 210) for transforming the movement of the actuator component (20) into a control of the lift flap (230), wherein
the actuator device (10) has an amplification frame, which encloses the actuator component, wherein
the transforming unit has a push/pull rod for coupling the amplification frame to the lift flap.

14. A wind turbine (100) with a rotor blade as claimed in one of claims 11 to 13.

15. A method of assembly for assembling an actuator device (10) as claimed in one of claims 1 to 10 on a rotor blade (108) as claimed in one of claims 11 to 13, wherein the method comprises attaching the actuator component (20) to the rotor blade (108) and/or connecting the control component (80) to the actuator component (20).

## Revendications

1. Dispositif actionneur (10) pour une éolienne (100), en particulier pour une pale de rotor (108) d'éolienne, avec un élément d'actionnement (20) et un élément de commande (80),
dans lequel l'élément d'actionnement (20) présente au moins une couche d'actionnement (30) avec un sens préférentiel (32) et au moins une couche d'excitation (40) sensiblement parallèlement à la couche d'actionnement (30),
dans lequel la couche d'actionnement (30) comporte un photo-actionneur (34), dans lequel le photo-actionneur (34) est conçu afin de modifier sur la base de la lumière d'excitation un allongement et/ou une tension de la couche d'actionnement (30) dans le sens préférentiel (32),
dans lequel la couche d'excitation (40) est conçue afin de guider la lumière d'excitation dans la couche d'actionnement (30),
dans lequel l'élément de commande (80) comporte une source de lumière (84) et un guide de lumière (82), dans lequel la source de lumière (84) est agencée éloignée de la couche d'excitation (40) et est reliée au moyen du guide de lumière (82) à la couche d'excitation (40), **caractérisé en ce que**
le guide de lumière (82) s'étend dans différents sens présentant une part inverse et en particulier opposés à travers la couche d'excitation (40).

2. Dispositif actionneur (10) selon la revendication 1, dans lequel l'élément d'actionnement (20) est réalisé comme élément d'actionnement empilé avec une pluralité de couches d'actionnement (30) et de couches d'excitation (40) empilées, dans lequel le guide de lumière (82) est réalisé sur une pluralité d'arêtes des couches d'excitation (40) sur au moins une surface de couche de l'élément d'actionnement empilé.

3. Dispositif actionneur (10) selon l'une quelconque des revendications précédentes, qui présente au moins deux guides de lumière (82), dans lequel au moins deux des guides de lumière entrent de différents côtés dans la couche d'excitation (40).

4. Dispositif actionneur (10) selon l'une quelconque des revendications précédentes, dans lequel le sens du guide de lumière (82) est désigné depuis la source de lumière (84) par un sens de guidage de lumière du ou des guides de lumière (82),
dans lequel des sections contiguës de différents guides de lumière (82) dans la couche d'excitation (40) présentent des sens de guidage de lumière au moins partiellement opposés.

5. Dispositif actionneur (10) selon l'une quelconque des revendications précédentes, dans lequel une évacuation de lumière du guide de lumière (82) diminue avec la longueur du guide de lumière (82), dans lequel au moins deux guides de lumière (82) s'étendent dans ou le long de la couche d'excitation (40) de telle manière qu'un apport de lumière uniforme soit effectué dans la couche d'actionnement (30).

6. Dispositif actionneur (10) selon l'une quelconque des revendications précédentes, dans lequel au moins deux guides de lumière (82) s'étendent au moins par sections en sens inverse à travers la couche d'excitation (40), dans lequel un point d'entrée d'un premier des au moins deux guides de lumière (82) dans la couche d'excitation (40) est en particulier contigu à un point de sortie d'un second des au moins deux guides de lumière (82).

7. Dispositif actionneur (10) selon la revendication 6, dans lequel les au moins deux guides de lumière (82) s'étendent respectivement en forme de méandres par la ou le long de la couche d'excitation (40), dans lequel dans la couche d'excitation (40) respectivement des sections sensiblement parallèles des deux guides de lumière (82) s'alternent, dans lequel en particulier les au moins deux guides de lumière (82) se chevauchent dans la zone des boucles en méandre, dans laquelle le sens des guides de lumière (82) s'inverse sensiblement.

8. Dispositif actionneur (10) selon l'une quelconque des revendications précédentes, dans lequel l'élément d'actionnement présente une forme sensiblement cylindrique avec un perçage creux à l'intérieur, dans lequel le ou les guides de lumière (82) est ou sont agencés sensiblement à l'intérieur du perçage creux.

9. Dispositif actionneur (10) selon l'une quelconque des revendications précédentes, dans lequel la zone de l'extrémité éloignée de la source de lumière (84) du guide de lumière présente un nano-revêtement (830).

10. Dispositif actionneur (10) selon l'une quelconque des revendications précédentes, dans lequel l'élément de commande (80) comporte plusieurs guides de lumière, dans lequel les plusieurs guides de lumière sont configurés afin de guider différentes longueurs d'onde et/ou plages spectrales.

11. Pale de rotor (108) d'une éolienne (100) avec un dispositif actionneur (10) selon l'une quelconque des revendications 1 à 10 et un élément actif (120, 230), dans laquelle le dispositif actionneur (10) est conçu pour la commande de l'élément actif (120, 230).

12. Pale de rotor selon la revendication 11, dans laquelle
l'élément d'actionnement (20) du dispositif actionneur (10) est configuré comme élément d'actionnement de flexion et dans laquelle
l'élément actif est configuré comme servoclapet (120), dans laquelle
l'élément d'actionnement (20) est monté sur la surface sur la zone du servoclapet (120).

13. Pale de rotor selon la revendication 11, dans laquelle
l'élément d'actionnement (20) du dispositif actionneur (10) est configuré comme élément d'actionnement d'allongement et dans laquelle
l'élément actif est configuré comme clapet de sustentation (230), dans laquelle
la pale de rotor (108) présente de plus une unité de transmission (200, 210) pour la transmission du mouvement de l'élément d'actionnement (20) dans une commande du clapet de sustentation (230), dans laquelle
le dispositif actionneur (10) présente en particulier un cadre de renforcement qui entoure l'élément d'actionnement, dans laquelle
l'unité de transmission présente une tige de poussée/traction pour le couplage du cadre de renforcement avec le clapet de sustentation.

14. Eolienne (100) avec une pale de rotor selon l'une quelconque des revendications 11 à 13.

15. Procédé de montage pour le montage d'un dispositif actionneur (10) selon l'une quelconque des revendications 1 à 10 au niveau d'une pale de rotor (108) selon l'une quelconque des revendications 11 à 13, dans lequel le procédé comporte un montage de l'élément d'actionnement (20) au niveau de la pale de rotor (108) et/ou une liaison de l'élément de commande (80) avec l'élément d'actionnement (20).
